# EUROPÄISCHE PATENTSCHRIFT

(11) **EP 2 054 280 B1**
(45) Veröffentlichungstag und Bekanntmachung des Hinweises auf die Patenterteilung: **22.05.2019**
(21) Anmeldenummer: 07802680.4
(22) Anmeldetag: 17.08.2007
(51) Int. Cl.: B60T 7/22, B60W 30/08, G08G 1/16

(54) **ANSTEUERUNG VON SICHERHEITSMITTELN EINES KRAFTFAHRZEUGS**
ACTUATION OF SAFETY MEANS OF A MOTOR VEHICLE
COMMANDE DE MOYENS DE SÉCURITÉ D'UN VÉHICULE AUTOMOBILE

(30) Priorität: 10.07.2007 DE 102007032039; 17.08.2007 DE 102007039038
(43) Veröffentlichungstag der Anmeldung: 06.05.2009
(73) Patentinhaber: Continental Teves AG & Co. OHG, 60488 Frankfurt am Main (DE); Automotive Distance Control Systems GmbH, 88131 Lindau/Bodensee (DE)
(72) Erfinder: GROITZSCH, Stephan, 69469 Weinheim (DE); KLUG, Michael, 63225 Langen (DE); OLSHANSKY, Yuriy, 65812 Bad Soden (DE); KALLNIK, Martin, 64291 Darmstadt (DE); MEURERS, Thomas, 65760 Eschborn/ts. (DE); TORRAS, Xavier, 64287 Darmstadt (DE); VAN DER VEGTE, Peter, 88046 Friedrichshafen (DE); RANDLER, Martin, 88090 Immenstaad (DE); STEPHAN, Tobias, 88142 Wasserburg (DE)
(86) Internationale Anmeldenummer: PCT/EP2007/058565
(87) Internationale Veröffentlichungsnummer: WO 2008/020071

(56) Entgegenhaltungen:
- EP-A- 1 375 280
- EP-A- 1 657 103
- EP-A- 1 688 295
- DE-A1- 10 301 290
- DE-A1-102005 013 164

## Beschreibung

### Technisches Gebiet

Die Erfindung betrifft ein Verfahren zum Ansteuern von Sicherheitsmitteln in einem Kraftfahrzeug in einer Fahrsituation, in der es zu einer Kollision zwischen dem Kraftfahrzeug und einem Umfeldobjekt im Umfeld des Kraftfahrzeugs kommen kann. Die Erfindung betrifft zudem ein System zum Ansteuern von Sicherheitsmitteln, das zur Durchführung des Verfahrens geeignet ist.

### Hintergrund der Erfindung

Moderne Kraftfahrzeuge verfügen teilweise bereits über Sicherheitssysteme, die in Fahrsituationen, in denen es zu einer Kollision mit einem Umfeldobjekt kommen könnte, Sicherheitsmittel ansteuern, welche den Fahrer auf die Gefahr aufmerksam machen, mittels derer kollisionsvermeidende Eingriffe in das Fahrverhalten des Fahrzeugs vorgenommen werden können und/oder welche die passive Sicherheit erhöhen, d.h. mögliche Unfallfolgen für die Fahrzeuginsassen reduzieren.

Die DE 103 01 290 A1 offenbart einen gattungsgemäßen Gegenstand und betrifft ein Kollisionsschadensminderungssystem zum Vermindern eines Schadens bei einer Kollision. Dabei ist u.a. vorgesehen, dass ein Mikrocomputer eine Gesamkollisionswahrscheinlichkeit berechnet, welche eine Wahrscheinlichkeit repräsentiert, nach der das eigene Fahrzeug und ein Objekt in einem befahrbaren Raum miteinander kollidieren werden.

Ein vergleichbarer Gegenstand ist in der EP 1 375 280 A2 offenbart, die ein Fahrerassistenzsystem und ein entsprechendes Verfahren für ein Fahrzeug betrifft, das einen Betreiber des Fahrzeugs bei der Benutzung des Fahrzeugs unterstützt.

Zum weiteren Hintergrund wird außerdem auf die DE 10 2005 013 164 A1 verwiesen, die Kraftfahrzeug-Sicherheitssysteme betrifft und sich insbesondere auf die zeitliche Aktivierung passiver Rückhaltesysteme bezieht. Die EP 1 657 103 A1 betrifft ferner ein Fahrerassistenzsystem und ein Verfahren zur Regulierung einer Gegenkraft auf ein Gaspedal, u. a. auf Grundlage eines bestehenden Gefahrenpotentials. Schließlich betrifft die EP 1 688 295 A2 ein System zur Schätzung einer Fahrabsicht eines Fahrers eines Fahrzeugs, insbesondere eines Automobils.

Grundlage für die Ansteuerung der Sicherheitssysteme ist eine Erfassung der aktuellen Fahrsituation mittels einer geeigneten Umfeldsensorik und eine elektronische Auswertung der erfassten Daten im Hinblick auf die Gefahr von Kollisionen zwischen dem Fahrzeug und den erfassten Objekten. Dabei besteht oftmals das Problem, dass die Fahrsituation anhand der erfassten Daten der im Umfeld des Fahrzeugs befindlichen Objekte nicht korrekt analysiert wird. Hierdurch kann es zu Fehlauslösungen der Sicherheitsmittel kommen, die zu einer Beeinträchtigung des Fahrkomforts und - wie beispielsweise im Falle eines unnötigen Bremsvorgangs - zu einer Gefährdung der Fahrsicherheit führen können.

### Darstellung der Erfindung

Es ist daher eine Aufgabe der vorliegenden Erfindung, eine möglichst zuverlässige Ansteuerung von Sicherheitsmitteln eines Kraftfahrzeugs vorzunehmen, bei der fehlerhafte Ansteuerungen möglichst weitgehend vermieden werden.

Erfindungsgemäß wird diese Aufgabe durch ein Verfahren mit den Merkmalen des Patentanspruchs 1 und durch ein System mit den Merkmalen des Patentanspruchs 19 gelöst. Zweckmäßige Ausgestaltungen der Erfindung sind in den Unteransprüchen angegeben.

Demgemäß ist es vorgesehen, dass ein Verfahren der eingangs genannten Art so durchgeführt wird, dass
- Bewegungsdaten wenigstens eines Umfeldobjekts bestimmt werden,
- nach Maßgabe der Bewegungsdaten wenigstens eine Situationshypothese in Bezug auf das Umfeldobjekt ermittelt wird, welche eine in Bezug auf das Umfeldobjekt vorliegende Fahrsituation beschreibt, wobei die Situationshypothese aus einer Menge mit begrenzter Anzahl vorgegebener Situationshypothesen ausgewählt wird, und
- die Sicherheitsmittel nach Maßgabe der ermittelten Situationshypothese angesteuert werden.

Darüber hinaus wird ein System zum Ansteuern von Sicherheitsmitteln in einem Kraftfahrzeug in einer Fahrsituation bereitgestellt, in der es zu einer Kollision zwischen dem Kraftfahrzeug und einem Umfeldobjekt im Umfeld des Kraftfahrzeugs kommen kann. Das System umfasst:
- wenigstens einen Umfeldsensor, der zur Bestimmung von Bewegungsdaten wenigstens eines Umfeldobjekts in einem Erfassungsbereich des Umfeldsensors verwendbar ist,
- eine Bewertungseinrichtung, die dazu ausgebildet ist, nach Maßgabe der Bewegungsdaten wenigstens eine Situationshypothese in Bezug auf das Umfeldobjekt zu ermitteln, welche eine in Bezug auf das Umfeldobjekt vorliegende Fahrsituation beschreibt, wobei die Situationshypothese aus einer Menge mit begrenzter Anzahl vorgegebener Situationshypothesen ausgewählt wird, und
- einen Gefahrenrechner, der dazu ausgebildet ist, Steuerbefehle zum Ansteuern der Sicherheitsmittel nach Maßgabe der ermittelten Situationshypothese zu ermitteln.

Die Erfindung beinhaltet die Idee, eine Bewertung der vorliegenden Fahrsituation, die im Hinblick auf potenzielle Gefahren vorgenommen wird, insbesondere im Hinblick auf das Risiko einer Kollision zwischen Kraftfahrzeug und dem Umfeldobjekt, anhand von Situationshypothesen vorzunehmen. Dabei wird eine Situationshypothese nach Maßgabe von ermittelten Bewegungsdaten des Umfeldobjekts aus einer Menge vorgegebener Situationshypothesen ausgewählt. Die vorgegebenen Situationshypothesen beziehen sich vorzugsweise auf solche Fahrsituationen, die mittels der in dem Kraftfahrzeug vorhandenen Umfeldsensorik zuverlässig erkannt bzw. unterschieden werden können. Somit wird anhand der Bewegungsdaten eine Mustererkennung vorgenommen, die zur Ermittlung einer bestimmten vorgegebenen Fahrsituation führt. Falls mehrere Umfeldobjekte erfasst werden, wird vorzugsweise für jedes relevante Umfeldobjekt eine Situationshypothese ermittelt, welche die in Bezug auf dieses Umfeldobjekt vorliegende Fahrsituation beschreibt. Typische Fahrsituationen, die in Bezug auf ein Umfeldobjekt vorliegen können, und die jeweils einer Situationshypothese entsprechen können, sind beispielsweise ein Auffahren auf das Umfeldobjekt, ein Passieren des Umfeldobjekts, ein Einscheren des Umfeldobjekts in eine Fahrspur auf der sich Kraftfahrzeug befindet oder eine mit hoher Wahrscheinlichkeit nicht vermeidbare Kollision mit dem Umfeldobjekt

Dadurch, dass die Ansteuerung der Sicherheitsmittel nicht in direkter Abhängigkeit von den Bewegungsdaten, sondern nach Maßgabe der ermittelten Situationshypothese vorgenommen wird, erfolgt die Ansteuerung zuverlässiger, und Fehlansteuerungen der Sicherheitsmittel können weitgehend vermieden werden.

In der Regel ergibt sich das Risiko für eine Kollision mit einem Umfeldobjekt auch aus dem Bewegungszustand des Kraftfahrzeugs. Daher ist es in einer Ausgestaltung des Verfahrens und des Systems vorgesehen, dass Bewegungsdaten des Kraftfahrzeugs ermittelt und bei der Ermittlung der Situationshypothese für das Umfeldobjekt berücksichtigt werden.

Eine Größe, die eine zuverlässige Aussage darüber erlaubt, ob es zu einer Kollision zwischen einem Umfeldobjekt und dem Kraftfahrzeug kommen kann und wie hoch das Risiko hierfür ist, ist die Zeitspanne bis zu einer möglichen Kollision zwischen dem Kraftfahrzeug und dem Umfeldobjekt.

Daher sieht eine weitere Ausgestaltung des Verfahrens und des Systems vor, dass die Situationshypothese in Abhängigkeit von einer Zeitspanne bis zu einer möglichen Kollision zwischen dem Kraftfahrzeug und dem Umfeldobjekt ausgewählt wird.

Die genannte Zeitspanne, die auch als Kollisionszeit (TTC) bezeichnet wird, kann beispielsweise anhand von Bewegungstrajektorien des Kraftfahrzeugs und des Umfeldobjekts bestimmt werden, die aus den Bewegungsdaten des Kraftfahrzeugs und des Umfeldobjekts ermittelt werden können. Die Kollisionszeit ist dabei die Zeitspanne bis zu dem Zeitpunkt, in dem sich die Front des sich entlang seiner berechneten Trajektorie bewegendes Kraftfahrzeugs und das sich entlang seiner berechneten Trajektorie bewegende Umfeldobjekt auf gleicher Höhe befinden würden.

Ferner ist eine Ausführungsform des Verfahrens und des Systems dadurch gekennzeichnet, dass die Situationshypothese in Abhängigkeit von einer Verzögerung ausgewählt wird, die erforderlich ist, um eine Kollision zwischen dem Kraftfahrzeug und dem Umfeldobjekt durch ein Bremsmanöver des Kraftfahrzeugs zu vermeiden.

Anhand der genannten Verzögerung, die hier auch als Kollisionsvermeidungsverzögerung bezeichnet wird, kann das Risiko für eine Kollision zwischen dem Kraftfahrzeug und dem Umfeldobjekt ebenfalls zuverlässig eingeschätzt werden. Insbesondere bei hoher Relativgeschwindigkeit zwischen dem Kraftfahrzeug und dem Umfeldobjekt kann dabei unter Berücksichtigung der von dem Kraftfahrzeug maximal erreichbaren Verzögerung ein hohes Kollisionsrisiko auch bei größeren Kollisionszeiten bestehen.

Darüber hinaus hängt die Höhe des Kollisionsrisikos auch von der relativen Position des Umfeldobjekts in Bezug auf das Kraftfahrzeug ab. Daher zeichnet sich eine Weiterbildung des Verfahrens und des Systems dadurch aus, dass mehrere Umfeldbereiche des Umfelds des Kraftfahrzeugs vorgegebenen werden, wobei die Situationshypothese in Abhängigkeit von dem Umfeldbereich ausgewählt wird, in dem sich das Umfeldobjekt befindet.

In einer verbundenen Ausgestaltung des Verfahrens und des Systems ist es vorgesehen, dass in Bezug auf wenigstens eine erste Situationshypothese ein Umfeldbereich vorgegeben wird, der einen Bereich vor dem Kraftfahrzeug innerhalb einer Fahrspur umfasst, in der sich das Kraftfahrzeug bewegt.

In diesem Umfeldbereich befinden sich Umfeldobjekte, bei denen es sich insbesondere um weitere Fahrzeuge handelt, auf die das Kraftfahrzeug möglicherweise auffahren könnte und die daher relevant im Hinblick auf die Ermittlung des Kollisionsrisikos sind.

Darüber hinaus sieht eine Ausgestaltung des Verfahrens und des Systems vor, dass in Bezug auf wenigstens eine zweite Situationshypothese ein Umfeldbereich vorgegeben wird, der einen Bereich vor dem Kraftfahrzeug an den Rändern der Fahrspur umfasst, in der sich das Kraftfahrzeug bewegt.

In Bezug auf die Umfeldobjekte, die sich in diesem Umfeldbereich befinden, kann grundsätzlich ebenfalls das Risiko für einen Auffahrunfall bestehen. Allerdings ist dieses in der Regel geringer als bei den Umfeldobjekten, die sich in derselben Fahrspur wie das Kraftfahrzeug befinden, da ein Ausweichen leichter möglich ist bzw. die Umfeldobjekte die Fahrspur rascher verlassen können.

Zudem ist in einer Ausgestaltung des Verfahrens und des Systems vorgesehen, dass in Bezug auf wenigstens eine dritte Situationshypothese ein Umfeldbereich vorgegeben wird, der einen Bereich vor dem Kraftfahrzeug innerhalb einer Fahrspur umfasst, die benachbart zu der Fahrspur ist, in der sich das Kraftfahrzeug bewegt.

In Bezug auf die Umfeldobjekte, die sich in der Fahrspur befinden, welche der Fahrspur des Kraftfahrzeugs benachbart ist, besteht grundsätzlich ein geringeres Risiko für eine Kollision. Allerdings besteht die Möglichkeit, dass diese Umfeldobjekte einen Fahrspurwechsel auf die Fahrspur des Kraftfahrzeugs vornehmen, der zu einer erheblichen Erhöhung des Kollisionsrisikos führt. Daher ist es vorteilhaft, die Umfeldobjekte in der benachbarten Fahrspur zu berücksichtigen.

Bei einer Weiterbildung des Verfahrens und des Systems ist es vorgesehen, dass die Situationshypothese in Abhängigkeit von einer Lateralgeschwindigkeit des Umfeldobjekts ausgewählt wird, wobei die Lateralgeschwindigkeit eine Komponente einer Geschwindigkeit des Umfeldobjekts entspricht, die senkrecht zu einer berechneten Bewegungstrajektorie des Kraftfahrzeugs gerichtet ist.

Vorteilhaft ermöglicht es die Lateralgeschwindigkeit des Umfeldobjekts zu bewerten, ob das Umfeldobjekt die Fahrspur, in der es sich befindet, verlässt oder ob es seine Fahrspur beibehält.

Eine Ausführungsform des Verfahrens und des Systems zeichnet sich ferner dadurch aus, dass für ein Umfeldobjekt, das sich in einem der vorgegebenen Umfeldbereiche befindet, eine der in Bezug auf den Umfeldbereich vorgegebenen Situationshypothesen in Abhängigkeit von seiner Lateralgeschwindigkeit und/oder der Zeitspanne bis zu einer möglichen Kollision zwischen dem Kraftfahrzeug und dem Umfeldobjekt ausgewählt wird.

Eine Weiterbildung des Verfahrens und der Vorrichtung zeichnet sich zudem dadurch aus, dass eine Hypothesenwahrscheinlichkeit bestimmt wird, welche ein Maß für eine Sicherheit dafür ist, dass die ausgewählte Situationshypothese auf das Umfeldobjekt anwendbar ist, wobei die Hypothesenwahrscheinlichkeit bei der Ansteuerung der Sicherheitsmittel berücksichtigt wird.

Der Vorteil dieser Weiterbildung besteht insbesondere darin, dass anhand der Hypothesenwahrscheinlichkeit berücksichtigt wird, dass eine Situationshypothese in unterschiedlichem Maße auf verschiedene Umfeldobjekte anwendbar sein kann. Anhand der Hypothesenwahrscheinlichkeit können Fahrsituationen zuverlässiger bewertet werden. Insbesondere können durch die Berücksichtigung der Hypothesenwahrscheinlichkeit bei der Ansteuerung der Sicherheitsmittel unverhältnismäßige Maßnahmen vermieden werden, die aufgrund der Situationshypothese allein möglicherweise angemessen wären.

Eine verbundene Ausgestaltung des Verfahrens und des Systems ist dadurch gekennzeichnet, dass die Hypothesenwahrscheinlichkeit in Abhängigkeit von der Zeitspanne bis zu einer möglichen Kollision zwischen dem Kraftfahrzeug und dem Umfeldobjekt bestimmt wird.

Ein Vorteil dieser Ausführungsform besteht darin, dass anhand der Zeitspanne bis zu einer möglichen Kollision zwischen dem Kraftfahrzeug und dem Umfeldobjekt, wie zuvor bereits beschrieben, die Höhe des Kollisionsrisikos besonders zuverlässig bewertet werden kann. Insbesondere kann es dabei vorgesehen sein, dass die Hypothesenwahrscheinlichkeit in Abhängigkeit von einer Abweichung der ermittelten Zeitspanne zu einer möglichen Kollision zwischen dem Kraftfahrzeug und dem Umfeldobjekt und einem für die ausgewählte Situationshypothese vorgegebenen Wert für diese Zeitspanne ermittelt wird.

Ferner sieht eine Ausführungsform des Verfahrens und des Systems vor, dass die Hypothesenwahrscheinlichkeit in Abhängigkeit von der Position des Umfeldobjekts innerhalb des vorgegebenen Umfeldbereichs ermittelt wird, wobei die Hypothesenwahrscheinlichkeit desto kleiner ist, je näher sich das Umfeldobjekt am Rand des vorgegebenen Umfeldbereichs befindet.

Vorteilhaft ist bei dieser Ausführungsform die Hypothesenwahrscheinlichkeit für Umfeldobjekte, die sich näher am Rand eines Umfeldbereichs befinden, geringer. Hierdurch wird berücksichtigt, dass das Kollisionsrisiko in Bezug auf Umfeldobjekte, die sich am Rand eines vorgegebenen Umfeldbereichs in der Regel geringer ist als für Objekte, die sich in der Mitte des Umfeldbereichs befinden.

Bei einer weiteren Ausführungsform des Verfahrens und des Systems ist es vorgesehen, dass die Hypothesenwahrscheinlichkeit in Abhängigkeit von der Lateralgeschwindigkeit des Umfeldobjekts bestimmt wird.

Vorteilhaft wird dabei anhand der Lateralgeschwindigkeit berücksichtigt, dass das Kollisionsrisiko für Umfeldobjekte, die sich in derselben Fahrspur befinden, wie das Kraftfahrzeug, geringer ist, wenn diese eine Lateralgeschwindigkeit aufweisen, da in diesem Fall eine gewisse Wahrscheinlichkeit für einen Fahrspurwechsel dieser Objekte besteht. Gleichfalls ist das Kollisionsrisiko in Bezug auf Objekte, die sich in der Nachbarfahrspur befinden größer, wenn diese eine Lateralgeschwindigkeit in Richtung der Fahrspur aufweisen, in der sich das Kraftfahrzeug befindet, da in diesem Fall mit hoher Wahrscheinlichkeit davon ausgegangen werden muss, dass diese Umfeldobjekte einen Fahrspurwechsel auf die Fahrspur des Kraftfahrzeugs vornehmen. Insbesondere kann es vorgesehen sein, dass die Hypothesenwahrscheinlichkeit in Abhängigkeit von einer Abweichung zwischen der Lateralgeschwindigkeit des Umfeldobjekts und einem für die ausgewählte Situationshypothese vorgegebenen Wert der Lateralgeschwindigkeit ermittelt wird.

Darüber hinaus ist es bei einer Weiterbildung des Verfahrens und des Systems vorgesehen, dass eine Objektwahrscheinlichkeit ermittelt wird, die ein Maß für die Sicherheit ist, mit der das Umfeldobjekt detektiert worden ist, wobei die Objektwahrscheinlichkeit bei der Ansteuerung der Sicherheitsmittel berücksichtigt wird.

Hierdurch wird berücksichtigt, dass Umfeldobjekte nicht immer mit einer hohen Genauigkeit und Zuverlässigkeit mittels der Umfeldsensorik des Kraftfahrzeugs detektiert werden können. Durch eine Berücksichtigung bei der Ansteuerung der Sicherheitsmittel können unverhältnismäßige Maßnahmen verhindert werden, wenn das Objekt bzw. seine Bewegungsdaten nur mit einer geringen Genauigkeit erfasst worden sind.

Eine Ausgestaltung des Verfahrens und des Systems ist ferner dadurch gekennzeichnet, dass die Ansteuerung der Sicherheitsmittel stufenweise erfolgt, wobei die Stufe, in der die Sicherheitsmittel angesteuert werden, in Abhängigkeit von der in Bezug auf das Umfeldobjekt ermittelten Situationshypothese bestimmt wird.

Die vorgesehenen Stufen zur Ansteuerung der Sicherheitsmittel unterscheiden sich vorzugsweise im Hinblick auf die "Heftigkeit" der ausgeführten Maßnahmen. In niedrigen Stufen kann dabei beispielsweise eine Warnung an den Fahrer des Kraftfahrzeugs ausgegebenen und/oder eine von dem Fahrer nicht wahrnehmbare Vorbefüllung der Fahrzeugbremsen mit Druckmittel vorgenommen werden. In höheren Stufen können Eingriffe in das Fahrverhalten, wie beispielsweise selbsttätige Bremsmanöver und/oder Maßnahmen zur günstigen Positionierung der Fahrzeuginsassen vorgesehen sein.

Zudem zeichnet sich eine Ausgestaltung des Verfahrens und des Systems dadurch aus, dass die Stufe, in der die Sicherheitsmittel angesteuert werden, auf eine maximale Stufe begrenzt wird, die in Abhängigkeit von der Hypothesenwahrscheinlichkeit und/oder der Objektwahrscheinlichkeit ermittelt wird.

In dieser Ausgestaltung erfolgt vorteilhaft eine Begrenzung der Stufe, in der die Sicherheitsmittel angesteuert werden in Abhängigkeit von der Hypothesenwahrscheinlichkeit und/oder der Objektwahrscheinlichkeit vorgenommen, um unverhältnismäßige Sicherheitsmaßnahmen zu vermeiden, wenn eine oder beide der genannten Wahrscheinlichkeiten klein ist.

Des Weiteren wird ein Computerprogrammprodukt bereitgestellt, das ein Computerprogramm aufweist, welches Befehle zur Ausführung eines Verfahrens der zuvor beschriebenen Art auf einem Computer aufweist. Bei dem Computer kann es sich insbesondere um einen Mikrocomputer handeln, der ein Bestandteile eines in dem Kraftfahrzeugs vorhandene Sicherheitssystems ist.

Ferner umfasst die Erfindung ein Kraftfahrzeug, das Sicherheitsmittel zur Erhöhung der Fahrsicherheit bei einer möglichen Kollision zwischen dem Kraftfahrzeug und einem Umfeldobjekt aufweist sowie ein System der zuvor beschriebenen Art zum Ansteuern der Sicherheitsmittel.

Die zuvor genannten sowie weiteren Vorteile, Besonderheiten und zweckmäßige Ausgestaltungen der Erfindung ergeben sich aus den Unteransprüchen und der nachfolgenden Darstellung bevorzugter Ausführungsbeispiele unter Bezugnahme auf die Figuren.

### Kurze Beschreibung der Figuren

Von den Figuren zeigt:
- Fig. 1: eine schematische Blockdarstellung eines Kraftfahrzeug mit einem erfindungsgemäß ausgestalteten Sicherheitssystem,
- Fig. 2: ein schematisches Blockdiagramm des Sicherheitssystems des in Figur 1 dargestellten Kraftfahrzeugs,
- Fig. 3: eine Veranschaulichung eines als Run-up-Schlauch bezeichneten Umfeldbereichs,
- Fig. 4: eine Veranschaulichung eines als ACC-Schlauch bezeichneten Umfeldbereichs,
- Fig. 5: eine Veranschaulichung eines als Pass-Schlauch bezeichneten Umfeldbereichs,
- Fig. 6 a)-c): jeweils ein Diagramm mit einen Kurve zur Veranschaulichung einer Teilwahrscheinlichkeit zur Berechnung einer Hypothesenwahrscheinlichkeit für eine Run-up-Hypothese,
- Fig. 7 a)-c): jeweils ein Diagramm mit einen Kurve zur Veranschaulichung einer Teilwahrscheinlichkeit zur Berechnung einer Hypothesenwahrscheinlichkeit für eine ACC-Hypothese,
- Fig. 8 a)-c): jeweils ein Diagramm mit einen Kurve zur Veranschaulichung einer Teilwahrscheinlichkeit zur Berechnung einer Hypothesenwahrscheinlichkeit für eine Pass-Hypothese,
- Fig. 9 a)-c): jeweils ein Diagramm mit einen Kurve zur Veranschaulichung einer Teilwahrscheinlichkeit zur Berechnung einer Hypothesenwahrscheinlichkeit für eine Cut-In-Hypothese,
- Fig. 10 a)-c): jeweils ein Diagramm mit einen Kurve zur Veranschaulichung einer Teilwahrscheinlichkeit zur Berechnung einer Hypothesenwahrscheinlichkeit für eine Collision-unavoidable-Hypothese,
- Fig. 11 a)-c): jeweils ein Diagramm mit einen Kurve zur Veranschaulichung einer Teilwahrscheinlichkeit zur Berechnung einer Hypothesenwahrscheinlichkeit für eine Collision- -Hypothese und
- Fig. 12: ein Diagramm zur Veranschaulichung der Bestimmun einer Interventionsstufe.

### Darstellung von Ausführungsbeispielen

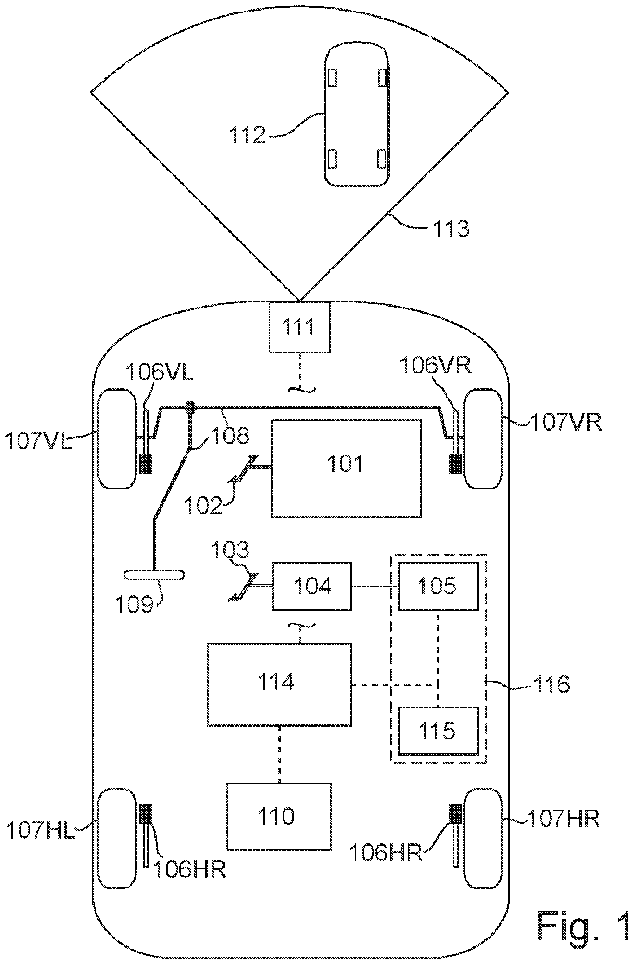

In Figur 1 ist ein Kraftfahrzeug 100 dargestellt, welches über einen Antriebsmotor 101 verfügt, der von dem Fahrer des Kraftfahrzeugs 100 mittels eines Fahrpedals 102 gesteuert wird. Ein von dem Antriebsmotor 101 bereitgestelltes Antriebsmoment wird über einen in der Figur nicht dargestellten Antriebsstrang an zwei oder alle vier Fahrzeugräder 107VL, 107VR, 107HL, 107HR übertragen, um das Kraftfahrzeug 100 anzutreiben. In der beispielhaften Darstellung sind die Vorderräder 107VL, 107VR des Kraftfahrzeugs 100 lenkbar ausgeführt und über einen Lenkstrang 108 mit einem von dem Fahrer des Kraftfahrzeugs 100 bedienbaren Lenkrad 109 verbunden. Zudem verfügt das Kraftfahrzeug 100 über eine Bremsanlage, die beispielsweise als hydraulische Bremsanlage ausgeführt ist. Von dem Fahrer des Kraftfahrzeugs 100 wird die Bremsanlage mittels eines Bremspedals 103 betätigt. Aufgrund einer Betätigung des Bremspedals 103 wird über einen in der Figur nicht dargestellten Bremskraftverstärker ein Bremsdruck in einem Hauptzylinder 104 aufgebaut. Über eine Hydraulikeinheit 105 kann der Bremsdruck an die Radbremsen 106VL, 106VR, 106HL, 106HR übertragen werden. Hierfür sind Hydraulikleitungen vorgesehen, die aus Gründen der Übersichtlichkeit in Figur 1 nicht dargestellt sind. Die Radbremsen 106VL, 106VR, 106HL, 106HR umfassen einen fahrzeugfest angebrachten Bremskolben, der gegen eine radfest montierte Bremsscheibe gepresst wird, wenn die Radbremsen 106VL, 106VR, 106HL, 106HR mit Druck beaufschlagt werden, wodurch ein Bremsmoment erzeugt wird. Die Hydraulikeinheit 105 ist in einer dem Fachmann an sich bekannten Art ausgeführt und ermöglicht eine fahrerunabhängige Einstellung des Bremsdrucks in den Radbremsen 106VL, 106VR, 106HL, 106HR. Insbesondere kann der Bremsdruck in den Radbremsen 106VL, 106VR, 106HL, 106HR mittels der Hydraulikeinheit 104 selbsttätig erhöht werden.

Ferner verfügt das Kraftfahrzeug 100 über eine Fahrzustandssensorik 110. Diese umfasse insbesondere Raddrehzahlsensoren, aus deren Signalen die Längsgeschwindigkeit des Kraftfahrzeugs 100 bestimmt werden kann, einen Gierratensensor zur Bestimmung der Gierrate des Kraftfahrzeugs 100 und gegebenenfalls einen Querbeschleunigungssensor zum Bestimmen der Querbeschleunigung des Kraftfahrzeugs 100. Vorzugsweise umfasst die Fahrzustandssensorik 110 ferner einen innerhalb des Lenkstrangs 108 angeordneten Lenkwinkelsensor zur Erfassung des Einschlagswinkels der lenkbaren Vorderräder 107VL, 107VR. Mithilfe der Messdaten der Fahrzustandssensorik 110 lässt sich insbesondere der jeweils aktuelle fahrdynamische Zustand des Kraftfahrzeugs 100 bestimmen. Über die Fahrzustandssensorik 110 hinaus weist das Kraftfahrzeug 100 zudem Sensoren auf, mittels derer der Betriebszustand einzelner Fahrzeugkomponenten ermittelt werden kann. Hierbei handelt es sich insbesondere um einen Fahrpedalsensor zum Erfassen der Fahrpedalstellung sowie einen Drucksensor zum Erfassen des in dem Hauptzylinder 104 der Bremsanlage von dem Fahrer eingestellten Bremsdrucks. Anstelle des Drucksensors kann auch ein Pedalwegsensor vorgesehen werden, der die Stellung des Bremspedals 103 erfasst. Mittels der letztgenannten Sensoren kann insbesondere das Verhalten des Fahrers bei der Längsführung des Kraftfahrzeugs 100 ermittelt werden.

Zur Erfassung von Umfeldobjekten 112 im Umfeld des Kraftfahrzeugs 100 verfügt dieses zudem über eine Umfeldsensorik 111. Die Umfeldsensorik 111 umfasst beispielsweise einen Radarsensor mit einem Erfassungsbereich 113, der einem Raumwinkelbereich vor dem Kraftfahrzeug 100 entspricht. Bei dem Radarsensor kann es sich beispielsweise um den Sensor eines in dem Kraftfahrzeug 100 vorgesehenen ACC-Systems (ACC: Adaptive Cruise Control) zur automatischen Abstandsregelung handeln, der innerhalb der vorliegenden Erfindung eine Mehrwertfunktion ausführen kann. Alternativ oder zusätzlich zu dem Radarsensor kann die Umfeldsensorik 110 beispielsweise einen Lidar-, Infrarot- oder Videosensor enthalten. Ferner kann der Erfassungsbereich 113 der Umfeldsensorik 111 mittels geeigneter Umfeldsensoren auch derart erweitert werden, dass er zusätzlich das seitliche und/oder hintere Umfeld des Kraftfahrzeugs 100 umfasst. Bei den in dem Erfassungsbereich 113 befindlichen und mittels der Umfeldsensorik 110 detektierten Umfeldobjekten 112, die im Hinblick auf eine mögliche Kollision mit dem Egofahrzeug 100 relevant sind, handelt es sich in erster Linie um weitere Kraftfahrzeuge, die sich zusammen mit dem Kraftfahrzeug 100 im Straßenverkehr bewegen. Zur sprachlichen Unterscheidung von den weiteren Kraftfahrzeugen wird das Kraftfahrzeug 100 daher im Folgenden auch als Egofahrzeug 100 bezeichnet.

Mittels der Umfeldsensorik 111 werden die Relativposition und Relativgeschwindigkeiten der in ihrem Erfassungsbereich 113 befindlichen Umfeldobjekte 112 in Bezug auf das Egofahrzeug 100 bestimmt. Als Position der Umfeldobjekte 112 wird dabei die Position von Bezugspunkten der Umfeldobjekte 112, bei denen es sich üblicherweise um den anhand der Sensordaten geschätzten Mittelpunkt der dem Egofahrzeug 100 zugewandten Objektfronten handelt. Anhand der Sensordaten wird in einer Auswertelektronik der Umfeldsensorik 111 zudem eine erste Klassifizierung der erfassten Umfeldobjekte 112 vorgenommen. Dabei werden beispielsweise anhand der erfassten Bewegung der Umfeldobjekte 112 und anhand der erfassten Umrisse der Umfeldobjekte 112, die sich im Straßenverkehr bewegenden Umfeldobjekte 112, von solchen Umfeldobjekten 112 unterschieden, die sich am Fahrbahnrand bzw. neben der Fahrbahn befinden.

Falls die Umfeldsensorik 111 einen Videosensor umfasst, können zudem Fahrspurmarkierungen erfasst werden, und die Auswertelektronik der Umfeldsensorik 111 kann aus deren Verlauf den Verlauf der Fahrbahn ermitteln, auf der sich das Egofahrzeug 100 und die am Straßenverkehr teilnehmenden Umfeldobjekte 112 bewegen. Falls die Fahrspurmarkierungen nicht mittels der eingesetzten Umfeldsensorik 111 erfasst werden können, kann der Fahrbahnverlauf unter Heranziehung von Umfeldobjekten 112, welche die Fahrbahn begrenzen - wie etwa Leitplanken - geschätzt werden. Über diese gegebenenfalls vorgesehene Verwendung hinaus werden die Umfeldobjekte 112, die nicht am Straßenverkehr teilnehmen jedoch nicht weiter betrachtet und verworfen. Im Folgenden bezeichnet der Begriff Umfeldobjekte daher nur solche Objekte im Umfeld des Egofahrzeugs 100, von denen angenommen wird, dass sie sich im Straßenverkehr bewegen.

Falls die Umfeldsensorik 111 einen in Fahrzeuglängsrichtung nach vorne gerichteten Radarsensor umfasst, wovon im Folgenden ausgegangen wird, dann können auch Umfeldobjekte 112 erfasst werden, die sich hinter dem unmittelbar vor dem Egofahrzeug 100 befindlichen Umfeldobjekt 112 befinden und von diesem verdeckt werden, sofern es sich bei dem vor dem Kraftfahrzeug befindlichen Umfeldobjekt 112 um ein Fahrzeug mit ausreichender Bodenfreiheit handelt. Der Grund hierfür ist, dass die Radarstrahlung von der Fahrbahn reflektiert wird und somit unter einen vorausfahrenden Fahrzeug hindurch auf das verdeckte Umfeldobjekt 112 trifft. Derartige verdeckte Umfeldobjekte 112 können bei der Auswertung der aktuellen Fahrsituation ebenfalls berücksichtigt werden.

Darüber hinaus stellt die Umfeldsensorik 111 Messwerte, wie etwa den Rückstreuquerschnitt eines erfassten Umfeldobjekts 112, bereit, welche Rückschlüsse über die Qualität der Detektion des Umfeldobjekts 112 zulassen.

Die mittels der zuvor beschriebenen Sensoren erfassten Daten werden innerhalb des Egofahrzeugs 100 einem Sicherheitssystem 114 zugeführt, welches anhand dieser Daten potenziell kritische Fahrsituationen erkennt und in derartigen Fahrsituationen Steuerbefehle zur Ansteuerung von Sicherheitsmitteln 116 des Egofahrzeugs 100 bestimmt.

Die Sicherheitsmittel 116 umfassen die Hydraulikeinheit 105, mit der die Bremsanlage des Egofahrzeugs 100 beeinflusst werden kann. Dabei kann etwa ein automatischer Bremsvorgang durchgeführt werden, oder die Radbremsen 106VL, 106VR, 106HL, 106HR können für einen nachfolgenden Bremsvorgang vorkonditioniert werden, indem beispielsweise ein geringer Bremsdruck aufgebaut wird, durch den ein Lüftspiel zwischen den Bremskolben und der Bremsschreibe verringert bzw. beseitigt wird. Zudem ist es möglich, Schwellen zur Auslösung bestimmter Funktionen der Hydraulikeinheit 105 zu beeinflussen, um diese Funktionen im Falle einer drohenden Kollision rascher auslösen zu können. Ein Beispiel für eine derartige Funktion ist ein an sich bekannter hydraulischer Bremsassistent (HBA), bei dem ein von dem Fahrer in der Bremsanlage eingestellter Bremsdruck in einer kritischen Fahrsituation auf einen Maximalwert erhöht wird, um eine maximale Verzögerung zu gewährleisten. Die Funktion wird üblicherweise aktiviert, wenn der Bremspedalgradient, d.h. die Geschwindigkeit, mit welcher der Fahrer das Bremspedal eintritt, oder Bremsdruckgradient, d.h. die Änderungsrate des Bremsdrucks innerhalb eines Hauptzylinders 104 der Bremsanlage, einen vorgegebenen Auslöseschwellenwert überschreitet. Durch eine Absenkung dieses Auslöseschwellenwerts kann der HBA rascher ausgelöst werden, so dass sich der Bremsweg des Egofahrzeugs 100 verkürzt.

Weitere Sicherheitsmittel 116 des Egofahrzeugs 100 sind in Figur 1 schematisch in dem Block 115 zusammengefasst. Die Sicherheitsmittel 115 umfassen Einrichtungen zur optischen, akustischen oder haptischen Warnung des Fahrers vor einer möglichen Kollision mit einem Umfeldobjekt 112. Optische Warnungen können beispielsweise mittels eines von dem Fahrer des Egofahrzeugs 100 einsehbaren Displays und/oder mittels einer Warnleuchte ausgegeben werden, die etwa in einer Armaturentafel des Egofahrzeugs 100 angeordnet ist. Akustische Warnungen umfassen beispielsweise Warntöne, die mittels eines Lautsprechers bzw. mittels eines in dem Egofahrzeug 100 vorgesehenen Audiosystems ausgegeben werden können. Haptische Warnungen können etwa mittels eines in dem Lenkstrang 108 angeordneten Lenkaktors ausgegeben werden, indem dieser das Lenkrad 109 kurzzeitig mit einem Drehmoment beaufschlagt. Alternativ oder zusätzlich kann das Egofahrzeug 100 auch durch eine kurzzeitige mittels der Hydraulikeinheit 105 ausgeführten Bremsdruckerhöhung abgebremst werden, so dass ein Bremsruck verursacht wird, welcher den Fahrer auf eine Gefahrsituation aufmerksam macht.

Darüber hinaus umfassen die Sicherheitsmittel 115 vorzugsweise eine oder mehrere Einrichtungen zur Erhöhung der passiven Fahrzeugsicherheit. Insbesondere können dabei reversible Gurtstraffer eingesetzt werden, mit denen die von den Fahrzeuginsassen angelegten Sicherheitsgurte angezogen werden können, um die Fahrzeuginsassen im Falle einer Kollision besser sichern zu können. Darüber hinaus können in dem Egofahrzeug 100 Einrichtungen zum Verstellen der Sitzposition der Fahrzeuginsassen vorgesehen werden, welche die Fahrzeuginsassen durch eine Verstellung der Sitze in eine günstige Position bringen, sowie Einrichtungen, mit denen Fenster und/oder ein Schiebedach des Egofahrzeugs 100 bei einer drohenden Kollision geschlossen werden können, um das Eindringen von Gegenständen in das Egofahrzeug 100 zu verhindern. Ferner können die Sicherheitsmittel 115 Einrichtungen zur Vorkonditionierung von irreversiblen Sicherheitsmitteln, wie Airbags und/oder pyrotechnischen Gurtstraffern, umfassen, welche die Auslöseschwellen der irreversiblen Sicherheitsmitteln im Falle einer möglichen Kollision herabsetzen, so dass die irreversiblen Sicherheitsmittel bei einer Kollision rascher ansprechen.

Darüber hinaus können die Sicherheitsmittel 115 beispielsweise auch einen Aktor zum Blockieren des Fahrpedals 102 umfassen, mit dem insbesondere verhindert werden kann, dass der Fahrer das Egofahrzeug 100 in einer kritischen Fahrsituation beschleunigt.

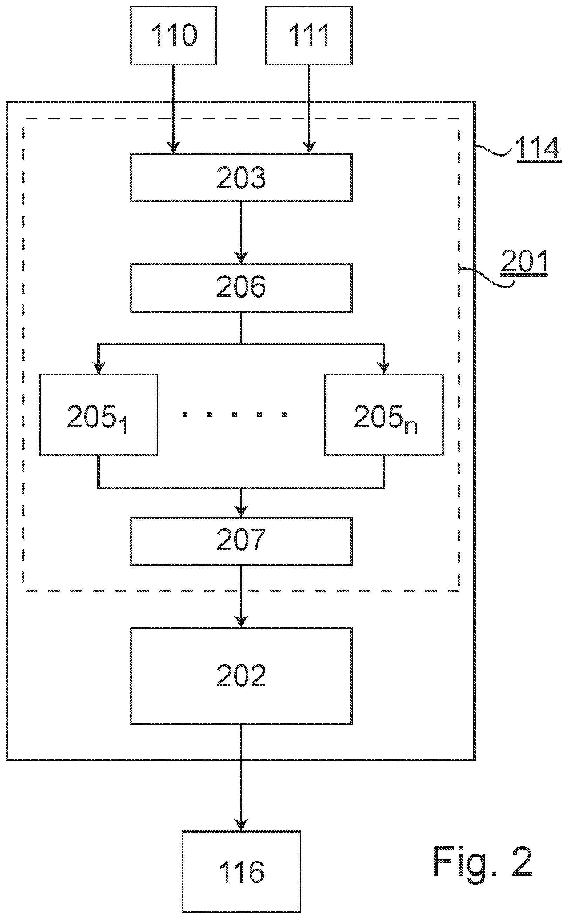

Das Sicherheitssystem 114 ist in der Figur 2 anhand eines schematischen Blockdiagramms näher dargestellt. Es umfasst eine Situationsanalyseeinrichtung 201, welche eine Analyse der aktuellen Fahrsituationen vornimmt und die ermittelte Fahrsituation im Hinblick auf die Gefahr von Kollisionen bewertet, sowie einen Gefahrenrechner 202, welcher in Abhängigkeit von der in der Situationsanalyseeinrichtung 201 vorgenommenen Bewertung der aktuellen Fahrsituation Signale zur Ansteuerung der Sicherheitsmittel 116 bestimmt und an die Sicherheitsmittel 116 bzw. die zur Steuerung der Sicherheitsmittel 116 vorgesehenen Aktoren sendet. Die Situationsanalyseeinrichtung 201 umfasst eine Auswerteeinrichtung 203, in der eine Analyse der vorliegenden Fahrsituationen vorgenommen wird. Dabei werden insbesondere Größen in Bezug auf die erfassten Umfeldobjekte 112 ermittelt, die für die nachfolgende Bewertung der Fahrsituationen und für die Ermittlung der Steuerbefehle für die Ansteuerung der Sicherheitsmittel 116 herangezogen werden. Die Bewertung der Fahrsituation wird in den n Hypothesenblöcken 205₁,..., 205ₙ vorgenommen. Darüber hinaus umfasst die Situationsanalyseeinrichtung 201 eine erste Vorfilterungseinrichtung 206 sowie eine zweite Vorfilterungseinrichtung 207.

In der Auswerteeinrichtung 203 werden die von der Umfeldsensorik 111 und der Fahrzustandssensorik 110 bereitgestellten Daten ausgewertet, um für die mittels der Umfeldsensorik 111 erfassten Umfeldobjekte 112 die Größen zu ermitteln, die für die nachfolgende Bewertung der aktuellen Fahrsituation herangezogen werden. In einer dem Fachmann grundsätzlich bekannten Weise werden dabei zunächst anhand der Bewegungsdaten der erfassten Umfeldobjekte 112 Trajektorien der Umfeldobjekte 112 berechnet. Ferner wird anhand der mittels der Fahrzustandssensorik 110 erfassten Daten eine Trajektorie des Egofahrzeugs 100 berechnet. Vorzugsweise geht in die Berechnung der Trajektorien der Umfeldobjekte 112 und des Egofahrzeugs 100 auch der ermittelte bzw. geschätzte Fahrbahnverlauf ein, da davon ausgegangen werden kann, dass das Egofahrzeug 100 sowie die Umfeldobjekte 112 im Wesentlichen der Fahrbahn folgen werden. Der Fahrbahnverlauf stellt dabei eine Randbedingung dar, die zumindest zur Plausibilisierung der Trajektorien herangezogen werden kann.

Anhand der Trajektorien der Umfeldobjekte 112 und des Eigenfahrzeugs 100 wird dann für jedes Umfeldobjekt 112 unter der Annahme stationärer Bedingungen die Zeitspanne bis zu dem Kollisionszeitpunkt berechnet, in dem sich das Egofahrzeug bzw. dessen Front auf gleicher Höhe wie das Umfeldobjekt 112 befindet. Diese Zeitspanne wird im Folgenden als TTC (time to collision) bezeichnet. Für die Umfeldobjekte 112, für die eine TTC berechnet worden ist, die kleiner als ein vorgegebener Schwellenwert TTC_{Schwelle} ist, wird zudem die Verzögerung des Egofahrzeugs 100 bestimmt, die erforderlich ist, um durch einen Bremsvorgang zu vermeiden, dass die Fahrzeugfront auf gleiche Höhe mit dem Umfeldobjekt 112 gelangt. Diese Verzögerung wird im Folgenden auch als Kollisionsvermeidungsverzögerung bezeichnet. Ferner wird in Bezug auf diese Umfeldobjekte 112 eine Querbeschleunigung berechnet, die erforderlich ist, um eine Kollision mit dem Umfeldobjekt 112 durch ein Ausweichmanöver bzw. ein Abweichen von der berechneten Trajektorie des Egofahrzeugs 100 ohne Durchführung eines Bremseneingriffs zu vermeiden. Diese Querbeschleunigung wird im Folgenden als Ausweichquerbeschleunigung bezeichnet. Zur Bestimmung der TTC, der Kollisionsvermeidungsverzögerung und der Ausweichquerbeschleunigung kann dabei grundsätzlich jedes dem Fachmann bekannte Verfahren eingesetzt werden. Ein bekanntes Verfahren zur Bestimmung dieser Größen ist beispielsweise in der internationalen Patentanmeldung WO 2005/082681 A1 beschrieben.

Falls es sich bei dem Umfeldobjekt 112 um ein gegebenenfalls berücksichtigtes verdecktes Umfeldobjekt 112 handelt, dann werden die TTC, die Kollisionsvermeidungsverzögerung und die Ausweichquerbeschleunigung für dieses Umfeldobjekt 112 unter Berücksichtigung des verdeckenden Umfeldobjekts 112 bestimmt. Dies kann beispielsweise dadurch erfolgen, dass eine Entfernung zwischen dem verdeckten Umfeldobjekt 112 und dem Egofahrzeug 100 angenommen wird, die um die Längsausdehnung des verdeckenden Umfeldobjekts 112 zuzüglich eines Abstands zwischen dem verdeckenden und dem verdeckten Umfeldobjekt 112 verringert ist.

Für die Umfeldobjekte 112, denen einen TTC zugeordnet wurde, die kleiner als der Schwellenwert TTC_{Schwelle} ist, wird zudem ein Abstand zwischen der berechneten Trajektorie des Egofahrzeugs 100 und der aktuellen Position des entsprechenden Umfeldobjekts 112 ermittelt. Dieser Abstand, der im Folgenden auch als Lateralversatz Δy des Objekts bezeichnet wird, entspricht dem Abstand der sich zwischen Egofahrzeug 100 und dem Umfeldobjekt 112 einstellt, wenn das Umfeldobjekt 112 an seiner aktuellen Position festgehalten wird und das Egofahrzeug 100 entlang seiner Trajektorie solange verschoben wird, bis sich seine Front auf gleicher Höhe mit dem Umfeldobjekt 112 befindet. Die Strecke, um die das Egofahrzeug 100 auf seiner berechneten Trajektorie verschoben werden müsste, damit seine Front sich auf gleicher Höhe mit dem Umfeldobjekt 112 befindet, wird im Folgenden auch kurz als Entfernung zwischen dem Egofahrzeug 100 und dem Umfeldobjekt 112 bezeichnet. Zudem wird die Geschwindigkeitskomponente der aktuellen Geschwindigkeit des Umfeldobjekts 112 ermittelt, die an dem Punkt senkrecht zu der berechneten Trajektorie des Egofahrzeugs 100 steht, in dem sich die Front des Egofahrzeugs 100 auf gleicher Höhe mit dem Umfeldobjekt 112 befindet. Diese Geschwindigkeitskomponente wird im Folgenden als Lateralgeschwindigkeit v_{y} des Umfeldobjekts 112 gerichtet ist.

Darüber hinaus wird für die Umfeldobjekte 112 mit einer TTC, die kleiner als der Schwellenwert TTC_{Schwelle} ist, eine Objektwahrscheinlichkeit bestimmt. Die Objektwahrscheinlichkeit ist ein Maß für die Sicherheit dafür, dass ein Umfeldobjekt 112 tatsächlich korrekt von der Umfeldsensorik 111 erfasst worden ist und wird in Abhängigkeit von dem Rückstreuquerschnitt des Umfeldobjekts 112 berechnet. Ferner wird das erfasste Bewegungsmuster des Umfeldobjekts 112 bei der Bestimmung der Objektwahrscheinlichkeit berücksichtigt, da dieses ebenfalls Rückschlüsse darauf zulässt, ob es sich um ein relevantes Umfeldobjekt 112 handelt.

Nach der Verarbeitung der von der Umfeldsensorik 111 und der Fahrzustandssensorik 110 bereitgestellten Daten in der Auswerteeinrichtung liegt somit für jedes Umfeldobjekt 112 insbesondere die ihm zugeordnete TTC vor. Für die Umfeldobjekte 112, denen eine TTC zugeordnet ist, die kleiner als der Schwellenwert TTC_{Schwelle} ist, liegen zudem folgende Daten vor:
- Die Kollisionsvermeidungsverzögerung,
- die Ausweichquerbeschleunigung,
- der Lateralversatz Δy,
- die Lateralgeschwindigkeit v_{y} und
- die Objektwahrscheinlichkeit.

Anhand der Informationen über die TTC und den Lateralversatz Δy wird in der Vorfilterungseinrichtung 206 eine Vorauswahl der relevanten Umfeldobjekte 112 vorgenommen, bei der die Umfeldobjekte 112 verworfen werden, bei denen in naher Zukunft eine Kollision mit dem Egofahrzeug 100 unmöglich oder zumindest höchst unwahrscheinlich ist. Insbesondere werden dabei die Umfeldobjekte 112 verworfen, denen eine TTC zugeordnet ist, die größer als der Schwellenwert TTC_{Schwelle} oder unendlich ist. Gleichfalls werden Umfeldobjekte 112 verworfen, für die eine Kollisionsvermeidungsverzögerung ermittelt worden ist, die größer als ein vorgegebener Schwellenwert ist. Ferner werden Umfeldobjekte 112 verworfen, deren Lateralversatz Δy größer als ein vorgegebener Schwellenwert ist, der dem Zweifachen einer Fahrspurbreite entspricht. Hierbei handelt es sich um Umfeldobjekte 112, die sich weder in derselben Fahrspur 301 wie das Egofahrzeug 100 noch in einer benachbarten Fahrspur 302 befinden. Als Fahrspurbreite wird dabei in einer Ausführungsform ein fest vorgegebener Wert zugrunde gelegt, der in etwa der Breite einer typischen Fahrspur entspricht. Vorzugsweise werden zudem alle Umfeldobjekte 112 verworfen, deren Absolutgeschwindigkeit über einen längeren Zeitraum den Wert 0 hatte, d.h. alle stehenden Umfeldobjekte 112, deren Anhalten nicht beobachtet worden ist.

Durch die Vorfilterung wird die weitere Datenverarbeitung auf die relevanten Umfeldobjekte 112 beschränkt, die potenziell "gefährlich" sind, d.h. auf die Umfeldobjekte 112, mit denen eine Kollision innerhalb der anhand des Schwellenwerts TTC_{Schwelle} vorgegebenen Zeitspanne nicht ausgeschlossen werden kann. Die Vorfilterung ist dabei sinnvoll, um die Rechenkapazität, die für die weitere Verarbeitung der Daten der Umfeldobjekte 112 erforderlich ist, einschränken zu können bzw. die Datenverarbeitungsgeschwindigkeit zu erhöhen.

Für jedes relevante Umfeldobjekt 112, das bei der Vorfilterung nicht verworfen worden ist, wird in den Hypothesenblöcken 205₁,...,205ₙ jeweils geprüft, ob auf das Umfeldobjekt 112 eine dem entsprechenden Hypothesenblock 205₁,...,205ₙ zugeordnete Situationshypothese anwendbar ist. Die in den verschiedenen Hypothesenblöcken 205₁,...,205ₙ auf ihre Anwendbarkeit hin geprüften Situationshypothesen beziehen sich auf typische, im Straßenverkehr auftretende Fahrsituationen, in denen zumindest potenziell die Gefahr für eine Kollision zwischen dem Egofahrzeug 100 und dem Umfeldobjekt 112 besteht, und die anhand der Daten unterscheidbar sind, die aus den Messsignalen der vorhandenen Umfeldsensorik 111 und Fahrzustandssensorik 110 ermittelt werden können. Anhand der Hypothesen werden diese Situationen im Hinblick auf ihre Kritikalität unterschieden, so dass die Kritikalität der in Bezug auf einem Umfeldobjekt 112 vorliegenden Fahrsituation aus der Art der auf das Umfeldobjekt 112 anwendbaren Hypothese abgeleitet werden kann.

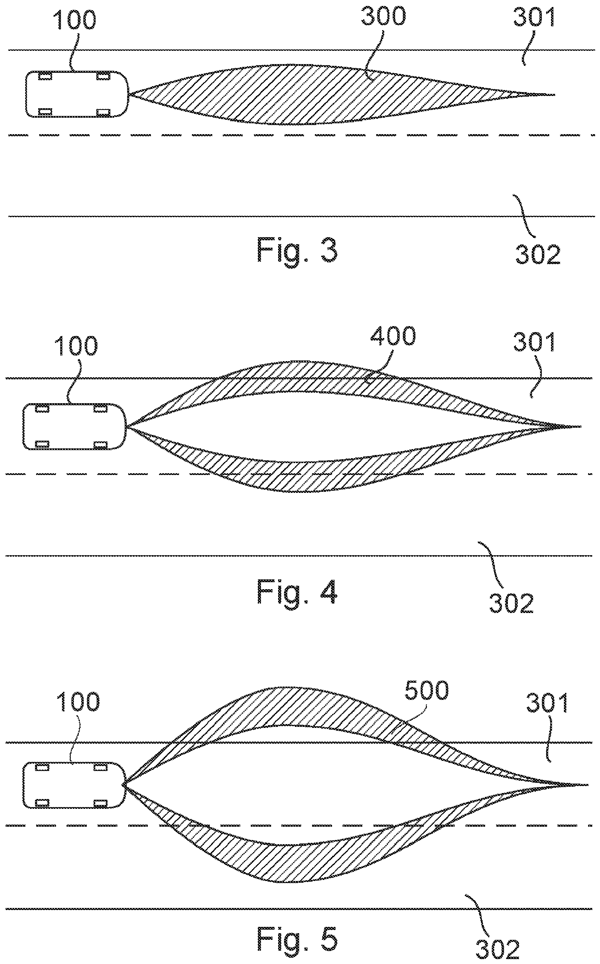

Die Anwendbarkeit einer Hypothese auf ein Umfeldobjekt 112 ergibt sich aus dem Lateralversatz Δy des Umfeldobjekts 112, der ihm zugeordneten TTC sowie der ihm zugeordneten Kollisionsvermeidungsverzögerung. In Bezug auf die TTC und die Kollisionsvermeidungsverzögerung sind dabei vorzugsweise für jede Hypothese Wertebereiche anhand von Schwellenwerten vorgegeben, und die Anwendbarkeit einer Hypothese wird festgestellt, wenn die Größen in den vorgegebenen Wertebereichen liegen. In Bezug auf den Lateralversatz Δy eines Umfeldobjekts 112 ist für jede Hypothese vorzugsweise ein vor dem Egofahrzeug 100 liegender Umfeldbereich vorgegeben, der im Folgenden als Schlauch bezeichnet wird, in dem sich das Umfeldobjekt 112 befinden muss, um die Anwendbarkeit der Hypothese feststellen zu können. Die Schläuche entsprechen Wertebereichen des Lateralversatzes Δy eines Umfeldobjekts 112, die in Abhängigkeiten von der Strecke vorgegeben sind, die das Egofahrzeug100 auf seiner berechneten Trajektorie zurücklegen müsste, damit sich eines Front auf gleicher Höhe mit dem Umfeldobjekt 112 befindet. Für eine geradlinige Bewegung des Egofahrzeugs 100 sind verschiedene Schläuche 300, 400 und 500 in den Figuren 3, 4 und 5 veranschaulicht. Falls die Trajektorie des Egofahrzeugs 100 eine Kurve beschreibt, sind die Schläuche gekrümmt, so dass insbesondere ihre Mittellinie auf der Trajektorie des Egofahrzeugs 100 liegt. Wie aus den Figuren ersichtlich, erstrecken sich die Schläuche 300, 400, 500 linsenförmig entlang der berechneten Trajektorie des Egofahrzeugs 100 und werden mit zunehmender Entfernung vom Egofahrzeug 100 schmaler. Hierdurch wird berücksichtigt, dass die berechnete Trajektorie für größere Entfernungen bzw. größere Zeiträume ungenauer und unsicherer wird, und es wird verhindert, dass eine Hypothese angewendet wird, obwohl die zugrunde gelegten Daten eine hohe Unsicherheit aufweisen.

Für jede vorgegebene Hypothese ist in der Situationsanalyseeinrichtung 201 ein Hypothesenblock 205₁;...;205ₙ vorgesehen. In jedem Hypothesenblock 205₁;...;205ₙ wird für jedes Umfeldobjekt 112, das nicht in der Vorfilterungseinrichtung 206 verworfen worden ist, überprüft, ob die jeweilige Hypothese auf das Umfeldobjekt 112 anwendbar ist. Falls eine Hypothese auf ein Umfeldobjekt 112 anwendbar ist, wird für dieses Umfeldobjekt 112 zudem eine Hypothesenwahrscheinlichkeit berechnet. Diese ist ein Maß für die Sicherheit, mit der die Hypothese auf das betreffende Umfeldobjekt 112 tatsächlich zutrifft.

Grundsätzlich können dabei beliebig viele Situationshypothesen vorgegeben werden, deren Anwendbarkeit auf ein bestimmtes Umfeldobjekt 112 jeweils in einem Hypothesenblock 205₁,...,205ₙ geprüft wird. Im Hinblick auf eine Einsparung benötigter Rechenkapazität bzw. eine Erhöhung der Datenverarbeitungsgeschwindigkeit in dem Sicherheitssystem 114 ist es jedoch vorteilhaft, eine begrenzte Anzahl relevanter Hypothesen vorzugeben. In einer Ausführungsform der Erfindung sind daher sechs Hypothesen vorgegeben, die beispielsweise als Run-up-Hypothese, ACC-Hypothese, Pass-Hypothese, Cut-in-Hypothese, Collision-unavoidable-Hypothese und Collision-Hypothese bezeichnet werden. Im Folgenden werden diese Hypothesen und die Kriterien für ihre Anwendbarkeit näher erläutert:

### 1. Run-up-Hypothese

Die Run-up-Hypothese bezieht sich auf Situationen, in denen sich das Egofahrzeug 100 einem Umfeldobjekt 112 nähert, das sich in derselben Fahrspur 301 befindet wie das Egofahrzeug 100, welches jedoch so weit von dem Umfeldobjekt 112 entfernt ist, dass ausreichend Zeit für die Vermeidung einer Kollision durch ein Ausweichen und/oder Bremsen zur Verfügung steht.

Für die Run-up-Hypothese kommen nur Umfeldobjekte 112 in Betracht, deren Lateralversatz Δy gering ist. Dabei wird ein Run-Up-Schlauch 300 vorgegeben, der für den Fall einer geradlinigen Bewegung des Egofahrzeugs 100 in Figur 3 dargestellt ist. Entsprechend den zuvor beschriebenen Fahrsituationen, auf die sich die Hypothese bezieht, entspricht die maximale Breite des Run-up-Schlauchs 300 der Breite einer Fahrspur. Umfeldobjekte 112 die sich außerhalb des Run-up-Schlauchs befinden, werden in Bezug auf die Run-up-Hypothese verworfen. Darüber hinaus werden Umfeldobjekte 112 verworfen, denen eine TTC zugeordnet ist, die kleiner als ein Schwellenwert TTC_{Run-up} ist, und für die Kollisionsvermeidungsverzögerung ermittelt worden ist, die größer als ein vorgegebener Schwellenwert ist. Die Schwellenwerte sind so gewählt, dass Umfeldobjekte 112 verworfen werden, bei denen eine Kollision mit dem Egofahrzeug 100 nicht mehr oder kaum noch auszuschließen ist. Für diese Umfeldobjekte 112 ist eine andere Hypothese anwendbar, namentlich die weiter unten beschriebene Collision-unavoidable-Hypothese oder die ebenfalls weiter unten beschriebene Collision-Hypothese.

Für die Umfeldobjekte 112, auf welche die Run-up-Hypothese gemäß den zuvor genannten Kriterien anwendbar ist, wird jeweils eine Hypothesenwahrscheinlichkeit berechnet. Wie bereits erwähnt, ist die Hypothesenwahrscheinlichkeit ein Maß dafür, mit welcher Sicherheit die Hypothese tatsächlich auf ein Umfeldobjekt 112 zutrifft. Für die Run-up-Hypothese und die nachfolgend beschriebenen Hypothesen wird die Hypothesenwahrscheinlichkeit für ein Umfeldobjekt 112 in Abhängigkeit von der dem Umfeldobjekt 112 zugeordneten TTC, dem Lateralversatz Δy des Umfeldobjekts 112 und seiner Lateralgeschwindigkeit v_{y} bestimmt. Dabei ist vorzugsweise vorgesehen, dass jeweils eine Teilwahrscheinlichkeit p_{i,Run-up} (i = 1, 2, 3) in Abhängigkeit von einer der drei zuvor genannten Größen bestimmt wird, und die Hypothesenwahrscheinlichkeit für das Umfeldobjekt 112 als Funktion der einzelnen Teilwahrscheinlichkeiten berechnet wird. In einer Ausführungsform wird die Hypothesenwahrscheinlichkeit dabei als Produkt der Teilwahrscheinlichkeiten bestimmt. Gleichfalls können die Teilwahrscheinlichkeiten auch mit unterschiedlichen Gewichten in die Hypothesenwahrscheinlichkeit eingehen.

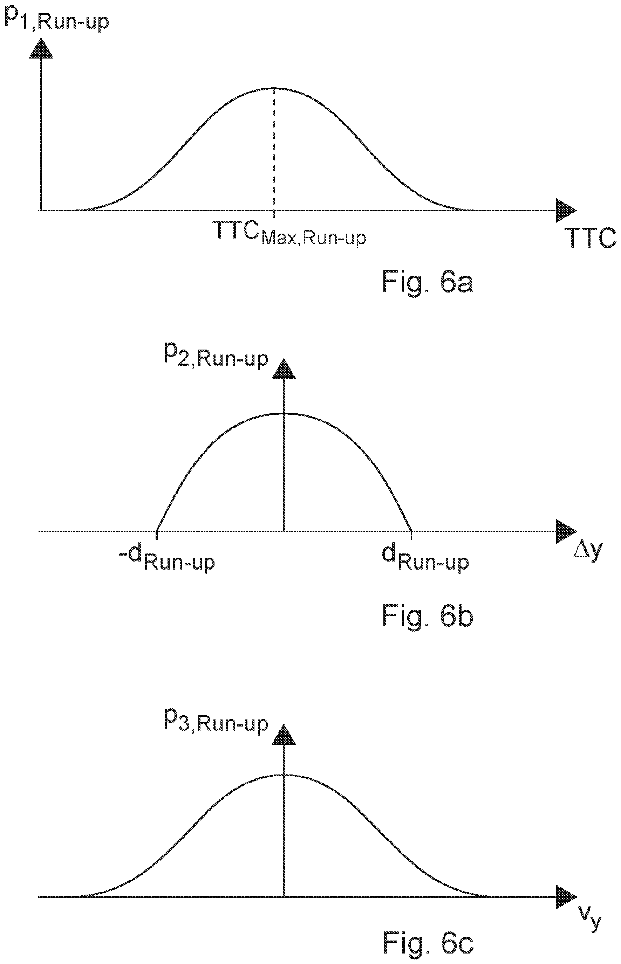

In Figur 6a ist die Teilwahrscheinlichkeit p_{i,Run-up} gezeigt, die in Abhängigkeit von der für das Umfeldobjekt 112 bestimmten TTC ermittelt wird. Die Wahrscheinlichkeit p_{i,Run-up} ist für kleine TTC klein und steigt mit zunehmender TTC bis auf den Wert 1 an, der für TTC = TTC_{Max,Run-up} angenommen wird. Für größere TTC nimmt die Wahrscheinlichkeit p_{1,Run-up} ab.

In Figur 6b ist die Wahrscheinlichkeit p_{2,Run-up} veranschaulicht, die in Abhängigkeit von dem Lateralversatz Δy des Umfeldobjekts 112 bestimmt wird. Entsprechend der Form des Run-up-Schlauchs 300 hat die Wahrscheinlichkeit p_{2,Run-up} für Objekte, deren Lateralversatz Δy betragsmäßig größer als der Schwellenwert d_{Run-up} ist, den Wert 0. Der Schwellenwert d_{Run-up} entspricht der halben Breite des Run-up-Schlauchs 300 und wird für jedes Umfeldobjekt 112 in Abhängigkeit von seiner Entfernung zu dem Egofahrzeug 100 ermittelt, d.h. von der Strecke, die das Egofahrzeug 100 auf seiner Trajektorie zurücklegen müsste, damit seine Front sich auf gleicher Höhe mit dem Umfeldobjekt 112 befindet. Ihren Maximalwert nimmt die Wahrscheinlichkeit p_{2,Run-up} an, wenn sich das Umfeldobjekt 112 in der Mitte des Run-Up-Schlauchs 300 befindet. Mit zunehmender Annäherung des Umfeldobjekts 112 an den Rand des Run-up-Schlauchs 300 nimmt die Wahrscheinlichkeit p_{2,Run-up} ab.

In Figur 6c ist die Wahrscheinlichkeit p_{3,Run-up} veranschaulicht, die in Abhängigkeit von der Lateralgeschwindigkeit v_{y} des Umfeldobjekts 112 ermittelt wird. Die Wahrscheinlichkeit p_{3,Run-up} nimmt den Maximalwert für Lateralgeschwindigkeiten v_{y} = 0 an und sinkt mit sich betragsmäßig vergrößernden Werten der Lateralgeschwindigkeit v_{y} auf den Wert 0. Hierdurch wird berücksichtigt, dass Objekte mit hoher Lateralgeschwindigkeit v_{y} die Fahrspur 301 des Egofahrzeugs 100 mit hoher Wahrscheinlichkeit verlassen, so dass ein Auffahren des Egofahrzeugs 100 auf ein solches Umfeldobjekt 112 mit hoher Wahrscheinlichkeit vermieden wird.

### 2. ACC-Hypothese

Die ACC-Hypothese bezieht sich gleichfalls auf Situationen, in denen sich das Egofahrzeug 100 einem Umfeldobjekt 112 nähert, das sich vor dem Egofahrzeug 100 befindet, jedoch so weit von dem Umfeldobjekt 112 entfernt ist, dass ausreichend Zeit zur Vermeidung einer Kollision zwischen dem Egofahrzeug 100 und dem Umfeldobjekt 112 besteht. Im Gegensatz zu der Run-up-Hypothese bezieht sich die ACC-Hypothese jedoch auf Umfeldobjekte 112, die sich eher am Rand der Fahrspur 301 des Egofahrzeugs 100 befinden. Daher wird für die ACC-Hypothese ein ACC-Schlauch 400 vorgegeben, welcher die in Abbildung 4 dargestellte Form aufweist. Der ACC-Schlauch 400 hat eine größere Breite als der Run-up-Schlauch 300, ist jedoch in der Mitte in etwa in der Form des Run-up-Schlauchs freigestellt, so dass sich voneinander getrennte Umfeldbereiche ergeben, die von dem ACC-Schlauch 400 umfasst sind. An der Stelle der maximalen Breite des ACC-Schlauchs 400 entspricht die Entfernung zwischen den Mitten dieser Bereiche in etwa der Breite einer Fahrspur. Umfeldobjekte 112, die sich nicht innerhalb des ACC-Schlauchs 400 befinden, werden in Bezug auf die ACC-Hypothese verworfen. Analog zu den Kriterien für die Anwendbarkeit der Run-up-Hypothese werden zudem Umfeldobjekte 112 für die ACC-Hypothese verworfen, denen eine TTC zugeordnet ist, die kleiner als ein Schwellenwert TTC_{Run-up} ist, und für die die Kollisionsvermeidungsverzögerung ermittelt worden ist, die größer als ein vorgegebener Schwellenwert ist.

Für die Umfeldobjekte 112, auf welche die ACC-Hypothese gemäß den zuvor beschriebenen Kriterien anwendbar ist, wird die Hypothesenwahrscheinlichkeit aus den Teilwahrscheinlichkeiten p_{i,ACC} (i = 1, 2, 3) bestimmt.

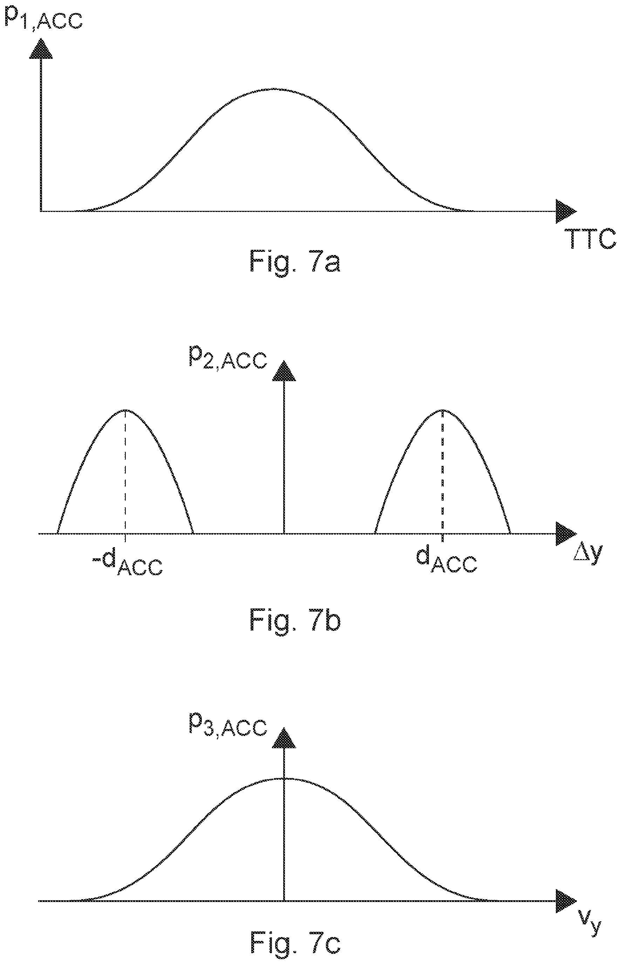

Die aus der dem betreffenden Umfeldobjekt 112 zugeordneten TTC berechnete Teilwahrscheinlichkeit p_{1,ACC}, die in Figur 7a veranschaulicht ist sowie die in Figur 7c veranschaulichte Teilwahrscheinlichkeit p_{3,ACC}, die in Abhängigkeit von der Lateralgeschwindigkeit v_{y} des Umfeldobjekts 112 bestimmt wird, entsprechen dabei den bereits im Zusammenhang mit der Run-up-Hypothese erläuterten Teilwahrscheinlichkeiten p_{1,Run-up} und p_{3,Run-up}.

In Abhängigkeit von dem Lateralversatz Δy wird die in Figur 7b veranschaulichte Teilwahrscheinlichkeit p_{2,ACC} berechnet. Wie aus der Figur 7b ersichtlich, nimmt die Teilwahrscheinlichkeit den Wert 0 für Umfeldobjekte 112 an, die sich außerhalb des ACC-Schlauchs 400 befinden. Die Wahrscheinlichkeit p_{2,ACC} nimmt das Maximum an für Umfeldobjekte 112, die sich in der Mitte eines der beiden durch einen Zwischenraum getrennten Bereiche des ACC-Schlauchs 400 befinden. Der halbe Abstand zwischen den Mitten dieser Bereiche hat dabei den Wert d_{ACC}. Der Wert d_{ACC} wird entsprechend der Form des ACC-Schlauchs 400 in Abhängigkeit von der Entfernung zwischen dem Umfeldobjekt 112 und dem Egofahrzeug 100 bestimmt, d.h., in Abhängigkeit von der Strecke, die das Egofahrzeug 100 auf seiner berechneten Trajektorie zurücklegen müsste, damit sich seine Front auf gleicher Höhe mit dem Umfeldobjekt 112 befindet. Je näher sich ein Umfeldobjekt 112 an den Rändern des ACC-Schlauchs 400 befindet, desto kleiner ist die Wahrscheinlichkeit p_{2,ACC}.

### 3. Pass-Hypothese

Die Pass-Hypothese bezieht sich auf Situationen, in denen sich das Egofahrzeug 100 einem Umfeldobjekt 112 nähert, welches sich vor dem Egofahrzeug 100 in einer der Fahrspur 301 des Egofahrzeugs 100 benachbarten Fahrspur 302 befindet, wobei eine hohe Wahrscheinlichkeit dafür besteht, dass das Egofahrzeug 100 das Umfeldobjekt 112 passieren wird, ohne dass es zu einer Kollision kommt. Typischerweise umfassen diese Situationen Überholvorgänge, bei denen sich das von dem Egofahrzeug 100 überholte Umfeldobjekt 112 in einer zu der Fahrspur 301 des Egofahrzeugs 100 benachbarten Fahrspur 302 befindet.

Daher wird für die Pass-Hypothese ein Pass-Schlauch 500 vorgegeben, der die in Figur 5 veranschaulichte Form hat. Die Form des Pass-Schlauchs 500 entspricht im Wesentlichen der des ACC-Schlauchs 400. Der Pass-Schlauch 500 ist jedoch im Vergleich mit dem ACC-Schlauch 400 in Querrichtung gestreckt, so dass er anstelle des Randes der Fahrspur 301 des Egofahrzeugs 100 die benachbarten Fahrspuren 302 abdeckt. Umfeldobjekte 112, die sich nicht innerhalb des Pass-Schlauchs 500 befinden, werden für die Pass-Hypothese verworfen. Gleichfalls werden Umfeldobjekte 112 für die Pass-Hypothese verworfen, deren Lateralgeschwindigkeit v_{y} betragsmäßig größer als ein vorgegebener Schwellenwert V_{y,Pass} ist. Falls es sich in Richtung der Trajektorie des Egofahrzeugs 100 bewegen, kommt für ein Umfeldobjekt 112 eine Anwendbarkeit der noch zu beschreibenden Cut-in-Hypothese in Betracht, falls es sich von der Trajektorie des Egofahrzeugs 100 weg bewegt, braucht ein Umfeldobjekt 112 im Hinblick auf eine mögliche Kollision mit dem Egofahrzeug 100 nicht berücksichtigt zu werden.

Für die Umfeldobjekte 112, auf welche die Pass-Hypothese gemäß den zuvor beschriebenen Kriterien anwendbar ist, wird jeweils die Hypothesenwahrscheinlichkeit aus den Teilwahrscheinlichkeiten p_{i,Pass} (i = 1, 2, 3).

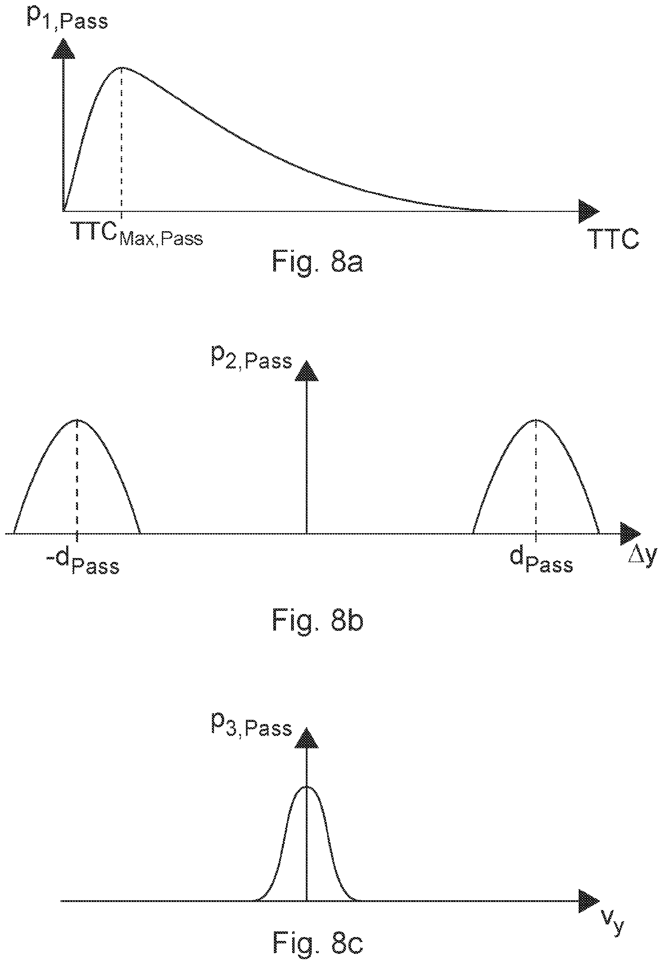

In dem Diagramm in Figur 8a ist die Teilwahrscheinlichkeit p_{1,Pass} veranschaulicht, die in Abhängigkeit von der dem betreffenden Umfeldobjekte 112 zugeordneten TTC ermittelt wird. Die Teilwahrscheinlichkeit p_{1,Pass} besitzt ein Maximum bei dem Wert TTC_{Max,Pass} und nimmt mit steigender TTC ab. Der Wert TTC_{Max,Pass} wird dabei so festgelegt, dass eine Kollision im Falle eines Fahrspurwechsels des Umfeldobjekts 112 auf die Fahrspur 301 des Egofahrzeugs 100 nur durch heftige Eingriffe in das Fahrverhalten des Egofahrzeugs 100 zu vermeiden wäre.

In Figur 8b ist die in Abhängigkeit von dem Lateralversatz Δy des Umfeldobjekts 112 bestimmte Teilwahrscheinlichkeit p_{2,Pass} veranschaulicht. Diese Teilwahrscheinlichkeit ist für Umfeldobjekte 112 maximal, die sich in der Mitte eines der beiden durch den Zwischenraum getrennten Bereiche des Pass-Schlauchs 500 befinden. Der halbe Abstand zwischen den Mitten dieser Bereich hat dabei den Wert d_{Pass}. Der Wert d_{Pass} wird entsprechend der Form des Pass-Schlauchs 500 in Abhängigkeit von der Entfernung zwischen dem Umfeldobjekt 112 und dem Egofahrzeug 100 bestimmt, d.h., in Abhängigkeit von der Strecke, die das Egofahrzeug 100 auf seiner berechneten Trajektorie zurücklegen müsste, damit sich seine Front auf gleicher Höhe mit dem Umfeldobjekt 112 befindet. Je näher sich ein Umfeldobjekt 112 an den Rändern des Pass-Schlauchs 500 befindet, desto kleiner ist die Wahrscheinlichkeit p_{2,Pass}.

Die in Abhängigkeit von der Lateralgeschwindigkeit v_{y} des Umfeldobjekts 112 ermittelte Teilwahrscheinlichkeit p_{3,Pass} ist anhand des in Figur 8c dargestellten Diagramms veranschaulicht. Die Teilwahrscheinlichkeit p_{3,Pass} ist maximal, wenn die Lateralgeschwindigkeit v_{y} des betreffenden Umfeldobjekts 112 den Wert 0 aufweist. Für betragsmäßig wachsende Lateralgeschwindigkeiten v_{y} sinkt die Teilwahrscheinlichkeit p_{3,Pass} rasch auf den Wert 0. Hierdurch wird berücksichtigt, dass die Wahrscheinlichkeit dafür, dass das Egofahrzeug 100 das Umfeldobjekt 112 passiert, größer ist, wenn die Lateralgeschwindigkeit v_{y} des Umfeldobjekts 112 geringer ist, so dass nicht davon ausgegangen werden muss, dass das Umfeldobjekt 112 einen Fahrspurwechsel ausführt.

### 4. Cut-in-Hypothese

Die Pass-Hypothese bezieht sich auf Situationen, in denen sich das Egofahrzeug 100 einem Umfeldobjekt 112 nähert, welches sich vor dem Egofahrzeug 100 in einer der Fahrspur 301 des Egofahrzeugs 100 benachbarten Fahrspur 302 befindet, wobei eine hohe Wahrscheinlichkeit dafür besteht, dass das Umfeldobjekt 112 einen Spurwechsel in die Fahrspur 301 des Egofahrzeugs 100 ausführt. Dabei wird davon ausgegangen, dass es aufgrund des Fahrspurwechsels zu einer Kollision mit dem Umfeldobjekt 112 kommen könnte, wenn nicht rechtzeitig ein Brems- oder Ausweichmanöver des Egofahrzeugs 100 ausgeführt wird.

Die Cut-in-Hypothese ist auf Umfeldobjekte 112 anwendbar, die sich innerhalb des Pass-Schlauchs 500 befinden. Für Umfeldobjekte 112, die sich außerhalb des Pass-Schlauchs befinden, wird die Cut-in-Hypothese verworfen. Zudem wird die Cut-in-Hypothese für Umfeldobjekte 112 verworfen, deren Lateralgeschwindigkeit v_{y} betragsmäßig nicht größer als der Schwellenwert V_{y,Pass} ist, da bei diesen Umfeldobjekten 112 nicht davon auszugehen ist, dass sie einen Fahrspurwechsel vornehmen.

Für die Umfeldobjekte 112, auf welche die Cut-in-Hypothese gemäß den zuvor beschriebenen Kriterien anwendbar ist, wird die Hypothesenwahrscheinlichkeit aus den Teilwahrscheinlichkeiten p_{i,Cut-in} (i = 1, 2, 3) bestimmt.

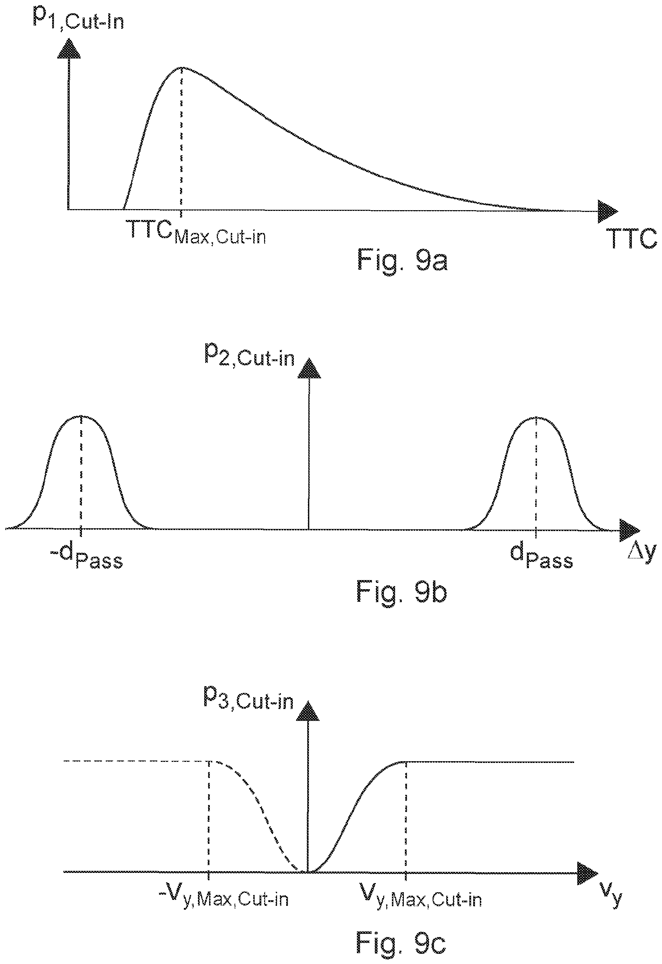

Die in Abhängigkeit von der TTC bestimmte Teilwahrscheinlichkeit p_{1,Cut-in} ist beispielhaft in Figur 9a dargestellt. Sie hat ein Maximum bei dem Wert TTC-_{Max,Cut-in}, der größer als der Wert TTC_{Max,Pass} ist, und nimmt mit steigender TTC ab. Die Teilwahrscheinlichkeit p_{1,Cut-in} entspricht dabei im Wesentlichen der zu größeren TTC hin verschobenen Teilwahrscheinlichkeit p_{1,pass}.

In dem in Figur 9b dargestellten Diagramm ist die Teilwahrscheinlichkeit p_{2,Cut-in} veranschaulicht, die in Abhängigkeit von dem Lateralversatz Δy des betreffenden Umfeldobjekts 112 berechnet wird. Sie hat einen ähnlichen Verlauf wie die Wahrscheinlichkeit p_{2,Pass}, und besitzt insbesondere jeweils ein Maximum bei den Werten -d_{Pass} und d_{Pass}. Im Gegensatz zu der Teilwahrscheinlichkeit p_{2,Pass}, fällt die Teilwahrscheinlichkeit p_{2,Cut-in} jedoch rascher ab.

Die in Abhängigkeit von der Lateralgeschwindigkeit v_{y} des betreffenden Umfeldobjekts 112 ermittelte Teilwahrscheinlichkeit p_{3,Cut-in} ist in Figur 9c in einem Diagramm veranschaulicht. Sie ist für Umfeldobjekte 112, die sich links bzw. rechts von der berechneten Trajektorie des Egofahrzeugs 100 befinden, verschieden. Unter der Annahme, dass der Lateralversatz Δy für sich rechts von der Trajektorie des Egofahrzeugs 110 befindliche Umfeldobjekte 112 positiv ist, gilt der rechte, durchgezogen gezeichnete Ast der Teilwahrscheinlichkeit p_{3,Cut-in} für Umfeldobjekte 112, die sich rechts von der Trajektorie des Egofahrzeugs 100 befinden, und der linke, gestrichelt gezeichnete Ast für Umfeldobjekte 112, die sich links von der Trajektorie des Egofahrzeugs 100 befinden. Mit steigendem Betrag der Lateralgeschwindigkeit v_{y} steigt die Teilwahrscheinlichkeit p_{3,Cut-in} auf den Maximalwert an, der bei einer Lateralgeschwindigkeit V_{y,Max,Cut-in} erreicht wird.

### 5. Collision-unavoidable-Hypothese

Die Collision-unavoidable-Hypothese bezieht sich auf Situationen, in denen sich das Egofahrzeug 100 einem Umfeldobjekt 112 nähert, welches sich in derselben Fahrspur 301 vor dem Egofahrzeug 100 befindet, und eine Lateralgeschwindigkeit v_{y} aufweist, die auf einen möglichen Spurwechsel hindeutet. Es wird jedoch von einer kritischen Situation ausgegangen, bei der eine Kollision mit dem Umfeldobjekt 112 nur mit einer geringen Wahrscheinlichkeit durch ein geeignetes Ausweichmanöver und/oder Bremsmanöver des Egofahrzeugs 100 verhindert werden kann.

Die Collision-unavoidable-Hypothese ist auf Umfeldobjekte 112 anwendbar, die sich innerhalb des Run-up-Schlauchs 300 befinden. Umfeldobjekte 112, die sich außerhalb des Run-up-Schlauchs 300 befinden, werden im Hinblick auf die Collision-unavoidable-Hypothese verworfen. Gleichfalls werden Umfeldobjekte 112 verworfen, die keine Lateralgeschwindigkeit v_{y} haben.

Für die Umfeldobjekte 112, auf welche die Collision-unavoidable-Hypothese gemäß den zuvor beschriebenen Kriterien anwendbar ist, wird die Hypothesenwahrscheinlichkeit aus den Teilwahrscheinlichkeiten p_{i,Collision-unavoidable} (i = 1, 2, 3) bestimmt.

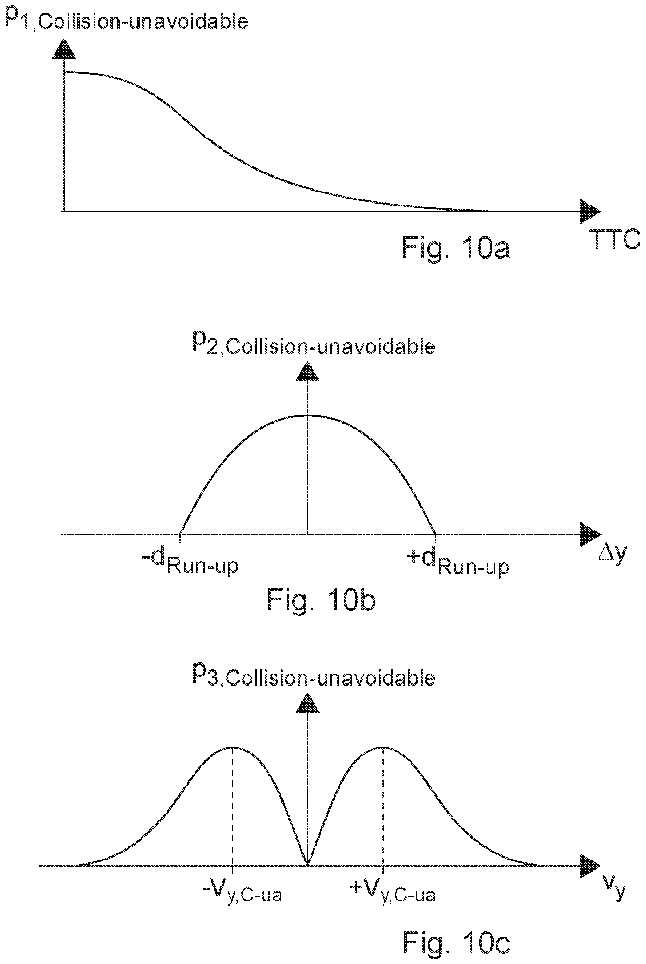

Die in Abhängigkeit von der TTC bestimmte Teilwahrscheinlichkeit p_{1,Collision-unavoidable} ist in Figur 10a veranschaulicht. Sie hat ihr Maximum bei kleinen Werten TTC und nimmt mit steigender TTC ab.

In dem Diagramm in Figur 10b ist die Teilwahrscheinlichkeit p_{2,Collision-unavoidable} veranschaulicht, die in Abhängigkeit von dem Lateralversatz Δy des betreffenden Umfeldobjekts 112 bestimmt wird und der bereits im Zusammenhang mit der Run-up-Hypothese beschriebenen Teilwahrscheinlichkeit p_{2,Run-up} entspricht.

Die Teilwahrscheinlichkeit p_{3,Collision-unavoidable}, die in Abhängigkeit von der Lateralgeschwindigkeit v_{y} eines Umfeldobjekts 112 bestimmt wird, ist in dem Diagramm in Figur 10c veranschaulicht. Entsprechend den zuvor beschriebenen Kriterien für die Anwendbarkeit der Collision-unavoidable-Hypothese nimmt sie bei einer Lateralgeschwindigkeit von v_{y} = 0 den Wert 0 an. Mit steigendem Betrag der Lateralgeschwindigkeit v_{y} vergrößert sich die Teilwahrscheinlichkeit p_{3,Collision-unavoidable} und nimmt ihr Maximum bei dem Wert V_{y,C-ua} an. Vergrößert sich die Lateralgeschwindigkeit v_{y} weiter, nimmt die Teilwahrscheinlichkeit p_{3,Collision-unavoidable} ab. Somit ist die Teilwahrscheinlichkeit p_{3,Collision-unavoidable} für Umfeldobjekte 112 mit einer hohen Lateralgeschwindigkeit v_{y} relativ gering. Diese Umfeldobjekte 112 verlassen die Fahrspur 301 des Egofahrzeugs 100 ausreichend schnell, so dass eine Kollision mit einer hohen Wahrscheinlichkeit vermieden wird.

### 6. Collision-Hypothese

Die Collision-Hypothese bezieht sich auf Situationen, in denen sich das Egofahrzeug 100 einem Umfeldobjekt 112 nähert, welches sich in derselben Fahrspur 301 vor dem Egofahrzeug 100 befindet und die Fahrspur 301 nicht verlässt. Dabei wird davon ausgegangen, dass sich eine Kollision zwischen dem Egofahrzeug 100 und dem Umfeldobjekt 112 mit hoher Wahrscheinlichkeit nicht vermeiden lässt.

Ähnlich wie die Collision-unavoidable-Hypothese ist die Collision-Hypothese auf Umfeldobjekte 112 anwendbar, die sich innerhalb des Run-up-Schlauchs 300 befinden. Umfeldobjekte 112, die sich außerhalb des Run-up-Schlauchs 300 befinden, werden im Hinblick auf die Collision- Hypothese verworfen. Gleichfalls werden Umfeldobjekte 112 verworfen, deren Lateralgeschwindigkeit v_{y} betragsmäßig einen vorgegebenen Schwellenwert überschreitet, da bei diesen Objekten davon ausgegangen wird, dass sie die Fahrspur 301 des Egofahrzeugs 100 so schnell verlassen, dass es zu keiner Kollision mit dem Egofahrzeug 100 kommen wird.

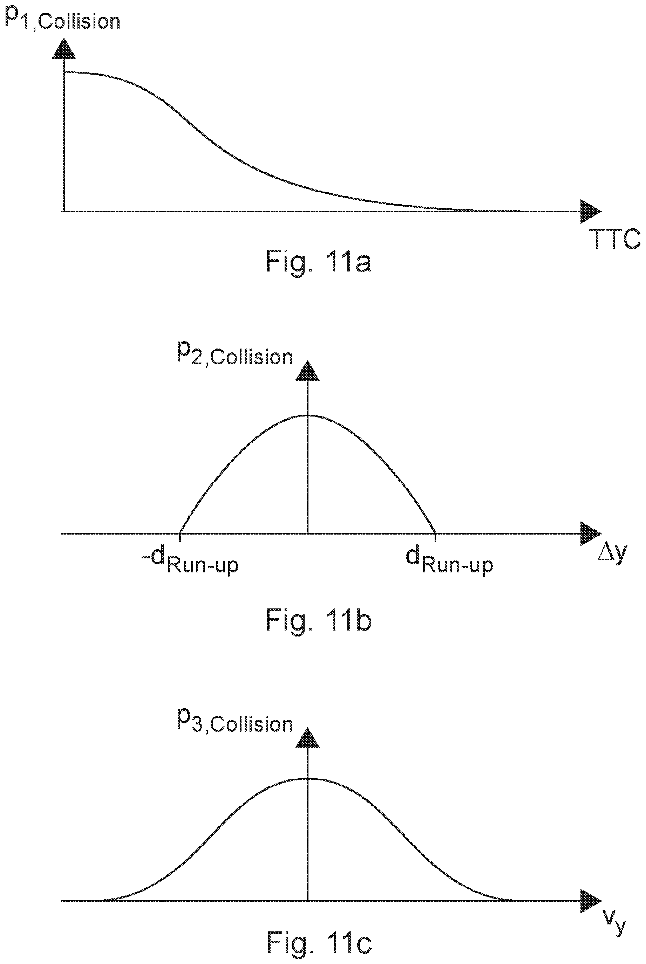

Für die Umfeldobjekte 112, auf welche die Collision-Hypothese gemäß den zuvor beschriebenen Kriterien anwendbar ist, wird die Hypothesenwahrscheinlichkeit aus den Teilwahrscheinlichkeiten p_{i,Collision} (i = 1, 2, 3) bestimmt. Die in Abhängigkeit von der TTC berechnete Teilwahrscheinlichkeit p_{1,Collision}, die in dem in Figur 11a dargestellten Diagramm veranschaulicht ist, entspricht der im Zusammenhang mit der Collision-unavoidable-Hypothese erläuterten Teilwahrscheinlichkeit p_{3,Collision-unavoidable}. Die in Figur 11b veranschaulichte Teilwahrscheinlichkeit p_{2,Collision}, die in Abhängigkeit von dem Lateralversatz Δy des Umfeldobjekts 112 ermittelt wird, und die in Figur 11c veranschaulichte Teilwahrscheinlichkeit p_{3,Collision}, die in Abhängigkeit von der Lateralgeschwindigkeit v_{y} des entsprechenden Umfeldobjekts 112 ermittelt wird, entsprechen den bereits im Zusammenhang mit der Run-up-Hypothese beschriebenen Teilwahrscheinlichkeiten p_{2,Run-up} und p_{3,Run-up}.

Die zuvor dargestellten Hypothesen erlauben, anhand der Art der einem Umfeldobjekt 112 zugeordneten Hypothese, eine Klassifizierung der Kritikalität eines Umfeldobjekts 112, im Hinblick auf die Wahrscheinlichkeit, mit der eine Kollision zwischen Egofahrzeug 100 und dem Umfeldobjekt 112 droht. Für die beschriebenen Rangfolgen besteht dabei im Hinblick auf die Gefährlichkeit des Umfeldobjekts 112 die folgende Rangfolge, bei der die Hypothese in der Reihenfolge sich erhöhender Kollisionswahrscheinlichkeit angegeben sind:
1. Pass-Hypothese
2. ACC-Hypothese
3. Cut-In-Hypothese
4. Run-up-Hypothese
5. Collision-unavoidable-Hypothese
6. Collision-Hypothese

Bei der in dem Gefahrenrechner 202 vorgenommenen Ansteuerung der Sicherheitsmittel 116 des Egofahrzeugs 100 wird daher die Art der auf ein Umfeldobjekt 112 anwendbaren Hypothese bei der Ermittlung der Stufe berücksichtigt, in der die Sicherheitsmittel 116 angesteuert werden sollen. Ferner wird die Hypothesenwahrscheinlichkeit berücksichtigt, die angibt, mit welcher Sicherheit die Hypothese auf ein Umfeldobjekt 112 zutrifft. Bei geringer Hypothesenwahrscheinlichkeit für eine bestimmte Hypothese wird dabei eine geringere Interventionsstufe gewählt, als bei einer großen Hypothesenwahrscheinlichkeit, um unangemessene Sicherheitsmaßnahmen zu vermeiden. Gemäß den zuvor beschriebenen Kriterien für die Anwendbarkeit der vorgegebenen Hypothesen können zudem für ein Umfeldobjekt 112 verschiedene Hypothesen anwendbar sein. Ist dies der Fall, unterscheiden sich jedoch die Hypothesenwahrscheinlichkeiten, die für das betreffende Umfeldobjekt 112 in Bezug auf die verschiedenen Hypothesen bestimmt worden sind. In diesem Fall geben vor allem die Hypothesenwahrscheinlichkeiten den Ausschlag dafür, welche Interventionsstufe von dem Gefahrenrechner 202 gewählt wird.

Bevor die Ansteuersignale zur Ansteuerung 114 in dem Gefahrenrechner 202 bestimmt werden, wird eine weitere Vorfilterung in der Vorfilterungseinrichtung 207 vorgenommen. In einer Ausführungsform wird dabei gegebenenfalls zunächst die Anwendung jeder Hypothese auf eine vorgegeben Anzahl von Umfeldobjekten 112 beschränkt, welche die größten Hypothesenwahrscheinlichkeiten für die entsprechende Hypothese aufweisen. Die übrigen Umfeldobjekte 112 werden für diese Hypothese verworfen. Die vorgegebene Anzahl beträgt dabei beispielsweise sechs.

Aus der Menge der Umfeldobjekte 112 auf die dann noch wenigstens eine Hypothese anwendbar ist, wird dann eine vorgegebene Anzahl von Umfeldobjekten 112 bestimmt, bei denen das Risiko für eine Kollision mit dem Egofahrzeug 100 am größten ist. Die Auswahl dieser Umfeldobjekte 112 erfolgt anhand der Art der den Umfeldobjekten 112 jeweils zugeordneten Hypothese unter Berücksichtigung der Hypothesenwahrscheinlichkeit. Zudem können auch die Werte der TTC, die Kollisionsvermeidungsverzögerung und/oder die Ausweichquerbeschleunigung berücksichtigt werden, die den Umfeldobjekten 112 zugeordnet sind. Die vorgegebene Anzahl beträgt dabei beispielsweise ebenfalls sechs.

Wie auch durch die erste Vorfilterung wird durch diese Begrenzung der innerhalb des Gefahrenrechners 202 zu berücksichtigenden Umfeldobjekte 112 die benötigte Rechenkapazität verringert bzw. die Datenverarbeitungsgeschwindigkeit erhöht.

Innerhalb des Gefahrenrechners 202 werden anhand der Objektdaten der verbleibenden Umfeldobjekte 112 Ansteuersignale zur Ansteuerung der Sicherheitsmittel 116 ermittelt, wobei sich ein Modus zur Ansteuerung der Sicherheitsmittel 116 aus einer Interventionsstufe ergibt, die ebenfalls in dem Gefahrenrechner 202 ermittelt wird. Dabei sind mehrere Interventionsstufen vorgegeben, die sich im Hinblick darauf unterscheiden, ob die Ansteuerung der Sicherheitsmittel 116 von dem Fahrer des Egofahrzeugs 100 wahrgenommen wird, ob ein Eingriff in das Fahrverhalten des Egofahrzeugs 100 vorgenommen wird, und im Hinblick darauf, in welchem Maße gegebenenfalls in das Fahrverhalten des Egofahrzeugs 100 eingegriffen wird. Die Interventionsstufen sind in einer Ausführungsform nummeriert, wobei Interventionsstufen mit höherer Ordnungszahl stärkere Maßnahmen umfassen. Für jede Interventionsstufe sind Modi vorgegeben, in den die Sicherheitsmittel 116 angesteuert werden.

Dabei kann beispielsweise die zur Beeinflussung der Bremsanlage vorgesehene Hydraulikeinheit 105 in folgenden Modi angesteuert werden:
i) Vorbefüllung der Radbremsen 106VL, 106VR, 106HL, 106HR mit Druckmittel, um das Lüftspiel zwischen den Bremskolben und Bremsscheiben zu verringern bzw. zu beseitigen, so dass das Egofahrzeug 100 bei einem nachfolgenden Bremsvorgang rascher verzögert werden kann.
ii) Vorbefüllung der Radbremsen 106VL, 106VR, 106HL, 106HR mit einem höheren Druck, so dass eine geringe Verzögerung des Egofahrzeugs 100 von beispielsweise 0,1 g bewirkt wird, wobei hier und im Folgenden mit g die Erdbeschleunigung bezeichnet ist. Hierdurch kann das Egofahrzeug 100 bei einem nachfolgenden Bremsvorgang ebenfalls rascher verzögert werden.
iii) "Vorbremsen": In diesem Modus werden Radbremsen 106VL, 106VR, 106HL, 106HR mit einem Bremsdruck beaufschlagt, der zu einer stärkeren Verzögerung des Egofahrzeugs 100 von beispielsweise 0,3 g führt
iv) "Zielbremsen": In diesem Modus wird ein selbsttätiger Bremsvorgang mit einer vorgegebenen Verzögerung des Egofahrzeugs 100 ausgeführt. Die Verzögerung kann dabei innerhalb des Gefahrrechners 202 beispielsweise in Abhängigkeit von der Kollisionsvermeidungsverzögerung ermittelt werden, die für ein Umfeldobjekt 112 bestimmt worden ist.
v) "Vollbremsung". In diesem Modus wird ein selbsttätiger Bremsvorgang mit einem maximalen Bremsdruck ausgeführt, bei dem die maximale Bremswirkung der Bremsanlage erzielt wird. Ein Blockieren der Räder 107VL, 107VR, 107HL, 107HR des Egofahrzeugs 100 wird bei der Vollbremsung vorzugsweise durch ein Antiblockiersystem (ABS) des Egofahrzeugs 100 verhindert.

Wie oben bereits beschrieben, kann es darüber hinaus auch vorgesehen sein, die Eintrittsschwelle des hydraulischen Bremsassistenten zu senken. Diese Maßnahme sowie der zuvor unter Ziffer i) aufgeführte Bremseneingriff werden von dem Fahrer bzw. den Insassen des Egofahrzeugs 100 nicht wahrgenommen. Daher können diese Maßnahmen bereits in einer sehr geringen Interventionsstufe vorgesehen sein. In den unter den Ziffern ii) bis v) aufgeführten Ansteuerungsmodi wird in zunehmendem Maß in das Fahrverhalten des Egofahrzeugs 100 eingegriffen. Diese Ansteuerungsmodi sind daher in höheren Interventionsstufen vorgesehen. Insbesondere eine Vollbremsung wird dabei vorzugsweise nur in der höchsten Interventionsstufe ausgeführt.

Als Sicherheitsmittel 116 in dem Egofahrzeug 100 eingesetzte reversible Gurtstraffer können beispielsweise in den folgenden Modi angesteuert werden:
i) Leichtes Anziehen der Sicherheitsgurte mit einer Kraft von beispielsweise etwa 50 Nm, so dass Gurtlose entfernt werden.
ii) Stärkeres Anziehen der Sicherheitsgurte mit einer Kraft von beispielsweise etwa 75 Nm, um die Gurte sicher anzulegen.
iii) Starkes Anziehen der Sicherheitsgurte, um die Fahrzeuginsassen korrekt in ihren Sitzen zu positionieren.

Reversible Gurtstraffer sind dabei vorzugsweise an jedem Sitz des Egofahrzeugs 100 vorhanden und werden für die von den Fahrzeuginsassen belegten Sitze synchron angesteuert. Ein leichtes Anziehen der Sicherheitsgurte, zum Entfernen der Gurtlose ist dabei bereits in niedrigeren Interventionsstufen möglich, da diese zwar von den Fahrzeuginsassen bemerkt, jedoch in der Regel nicht als Komforteinbuße wahrgenommen wird. Die unter den Ziffern ii) und iii) aufgeführten Ansteuerungsmodi werden vorzugsweise erst in höheren Interventionsstufen eingesetzt, um die Fahrzeuginsassen im Falle eines hohen bzw. sehr hohen Kollisionsrisikos geeignet zu sichern.

Darüber hinaus können in einer gefährlichen oder potenziell gefährlichen Fahrsituation verschiedenartige Fahrerwarnungen in dem Egofahrzeug 100 ausgegeben werden. Insbesondere können dabei folgende Warnstufen vorgesehen werden:
i) Eine optische Warnung des Fahrers anhand eines Warnhinweises, der in einem von dem Fahrer des Egofahrzeugs 100 einsehbaren Display dargestellt wird oder mittels einer zusätzlichen Lampe ausgegeben wird, die in der Armaturentafel des Egofahrzeugs 100 angeordnet ist.
ii)- Eine akustische Vorwarnung des Fahrers. Diese kann beispielsweise der an sich bekannten Warnung eines ACC-Systems entsprechen, mit dem dieses den Fahrer zum Eingriffen auffordert.
iii) eine akustische Akutwarnung des Fahrers, die eindrücklicher ist, als die akustische Vorwarnung. Insbesondere kann die Akutwarnung lauter sein, als die Vorwarnung des Fahrers und/oder höhere Töne enthalten.
iv)-Eine haptische Warnung des Fahrers. Diese kann beispielsweise durch einen kurzzeitigen Bremsimpuls erzeugt werden, der mittels der Hydraulikeinheit 105 in die Bremsanlage eingesteuert wird, oder es wird etwa mittels des Lenkaktors kurzzeitig ein Drehmoment auf das Lenkrad 109 aufgebracht.

Eine optische Warnung des Fahrers kann dabei bereits in geringeren Interventionsstufen vorgesehen werden, da diese von dem Fahrer in der Regel als Hinweis und nicht als Störung empfunden wird. Die unter den Ziffern ii) bis iv) aufgeführten Warnstufen werden in höheren Interventionsstufen eingesetzt.

Darüber hinaus können, wie oben bereits erwähnt, Einrichtungen zur Vorkonditionierung passiver Sicherheitsmittel, wie etwa Airbags, zur Verstellung der Sitzposition der Fahrzeuginsassen oder zum Schließen von Fenstern und/oder eines Schiebedachs des Egofahrzeugs 100 durch den Fahrer angesteuert werden. Eine weitere Maßnahme besteht beispielsweise in der Blockierung des Fahrpedals 102 durch einen von dem Gefahrenrechner 202 angesteuerten Aktor.

Die Interventionsstufen umfassen insbesondere eine Interventionsstufe 0, in der keine Ansteuerung der Sicherheitsmittel 116 erfolgt. Darüber hinaus kann eine beliebige Anzahl weiterer Interventionsstufen vorgesehen werden, die mit sich erhöhender Ordnungszahl heftigere Maßnahmen vorsehen. Bei diesen Maßnahmen kann es sich um einzelne der zuvor genannten Maßnahmen handeln, gleichfalls können jedoch auch Kombinationen mehrerer Maßnahmen in einer Interventionsstufe vorgesehen sein.

In einer Ausführungsform sind beispielsweise neben der Interventionsstufe 0 die neun weiteren Interventionsstufen vorgesehen, die im Folgenden mit ihren Ordnungszahlen angegeben werden:
1. Die Auslöseschwelle des hydraulischen Bremsassistenten wird abgesenkt.
2. Zusätzliche zu den Maßnahmen der Stufe 1 wird eine optische und gegebenenfalls akustische Vorwarnung des Fahrers ausgegeben.
3. Zusätzlich zu den Maßnahmen der Stufe 2 erfolgt eine Vorbefüllung der Radbremsen 106VL, 106VR, 106HL, 106HR.
4. Zusätzlich zu den Maßnahmen der Stufe 3 erfolgt eine akustische Akutwarnung des Fahrers, wobei die Akutwarnung anstelle einer gegebenenfalls in Stufe 3 vorgesehenen akustischen Vorwarnung ausgegeben wird.
5. Zusätzlich zu dem Maßnahmen der Stufe 4 wird das Fahrpedal 102 blockiert.
6. Zusätzlich zu den Maßnahmen der Stufe 5 erfolgt eine Vorbefüllung der Radbremsen 106VL, 106VR, 106HL, 106HR mit einem höheren Bremsdruck, die anstelle der in Stufe 5 vorgesehenen Vorbefüllung durchgeführt wird.
7. Zusätzlich zu den Maßnahmen der Stufe 5 erfolgt ein selbsttätiges Vorbremsen, das anstelle der in Stufe 5 vorgesehenen Vorbefüllung der Radbremsen 106VL, 106VR, 106HL, 106HR durchgeführt wird.
8. Zusätzlich zu den Maßnahmen der Stufe 5 erfolgt eine Zielbremsung, die anstelle der in Stufe 5 vorgesehenen Vorbefüllung der Radbremsen 106VL, 106VR, 106HL, 106HR durchgeführt wird.
9. Zusätzlich zu den Maßnahmen der Stufe 8 werden die Sicherheitsgurte mittels der Gurtstraffer stark angezogen, und es erfolgt eine Vorkonditionierung der Airbags des Egofahrzeugs 100.

Zur Ermittlung bzw. Auswahl der Interventionsstufe, die in Bezug auf die vorliegende Fahrsituation angemessen ist, werden in dem Gefahrenrechner 202 die Objektdaten der Umfeldobjekte 112 herangezogen, die nicht in der Vorfilterungseinrichtung 207 verworfen worden sind. Die Objektdaten, die für die Auswertung in dem Gefahrenrechner 202 relevant sind, umfassen insbesondere die TTC, die Kollisionsvermeidungsverzögerung und die Ausweichquerbeschleunigung, die einem Umfeldobjekt 112 zugeordnet sind, die Art der auf das Umfeldobjekt 112 anwendbaren Hypothesen sowie die entsprechenden Hypothesenwahrscheinlichkeiten und die Objektwahrscheinlichkeit.

Darüber hinaus werden zur Bestimmung der Interventionsstufe vorzugsweise verschiedene Größen herangezogen, die das Verhalten des Fahrers des Egofahrzeugs 100 charakterisieren, wie insbesondere die Fahrpedalstellung und die Bremspedalstellung bzw. der von dem Fahrer im Hauptzylinder 105 der Bremsanlage eingestellte Bremsdruck. Vorzugsweise wird zudem der Fahrzeugzustand berücksichtigt, insbesondere der Betriebszustand des Antriebsmotors 101 des Egofahrzeugs 100 und eine abgesicherte Information darüber, ob sich das Egofahrzeug 100 in Vorwärtsrichtung bewegt.

Zur Bestimmung der angemessenen Interventionsstufe ermittelt der Gefahrenrechner 202 zunächst für jedes relevante Umfeldobjekt 112 eine Interventionsstufe pro auf das Umfeldobjekt 112 anwendbarer Hypothese. Das heißt, für ein Umfeldobjekt 112, dem mehrere Situationshypothesen zugeordnet sind, wird jeweils eine Interventionsstufe in Bezug auf jede auf das Umfeldobjekt 112 anwendbare Hypothese ermittelt. Aus den in dieser Weise ermittelten einzelnen Interventionsstufen ermittelt der Gefahrenrechner 202 dann das Maximum, um die Interventionsstufe zu ermitteln, auf deren Grundlage die Ansteuerung der Sicherheitsmittel 116 vorgenommen wird.

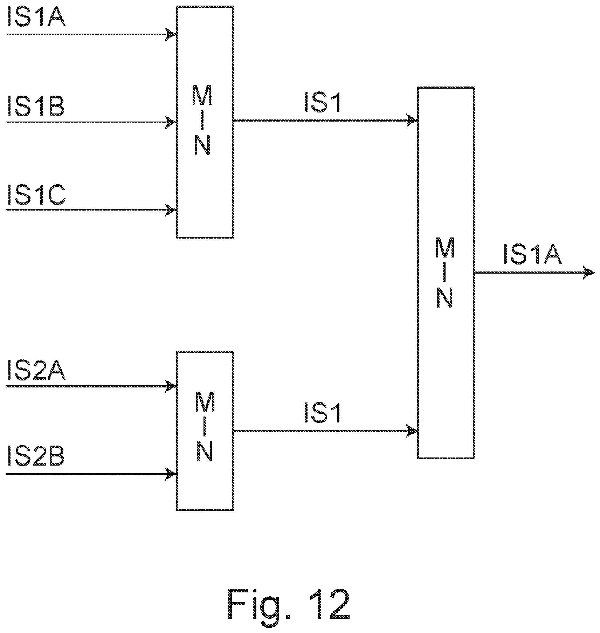

Die von dem Gefahrenrechner 202 durchgeführte Berechnung der Interventionsstufe bezüglich eines Umfeldobjekts 112 und einer auf dieses anwendbaren Hypothese ist schematisch in Figur 12 veranschaulicht.

Dabei wird anhand der Objektdaten eine "gewünschte Interventionsstufe" IS1 bestimmt, welche insbesondere die in der Auswerteeinrichtung 203 vorgenommene Auswertung der Fahrsituation in Bezug auf das Umfeldobjekt 112 berücksichtigt. Wie aus Figur 12 ersichtlich, ist die Interventionsstufe IS1 das Minimum der Interventionsstufen IS1A, IS1B und IS1C.

Die Interventionsstufe IS1A wird in Abhängigkeit von der Art der dem Umfeldobjekt 112 zugeordneten Hypothese ermittelt. Ferner werden bei der Bestimmung der Interventionsstufe IS1A die TTC, die Kollisionsvermeidungsverzögerung und/oder die Ausweichquerbeschleunigung herangezogen, die dem Umfeldobjekt 112 zugeordnet sind. Vorzugsweise berechnet der Gefahrenrechner 202 aus diesen Größen und der Information über die Art der auf das Umfeldobjekt 112 anwendbaren Hypothese ein Gefahrenpotenzial, das ein Maß für das Risiko einer Kollision zwischen dem Egofahrzeug 100 und dem Umfeldobjekt 112 ist. Anhand dieses Gefahrenpotenzials kann dann die Interventionsstufe ISA1 ermittelt werden. In einer Ausführungsform sind dabei anhand von Schwellenwerten Intervalle des Gefahrenpotenzials vorgegeben, denen jeweils eine Interventionsstufe zugeordnet ist.

Die Interventionsstufe IS1B wird aus der dem Umfeldobjekt 112 in Bezug auf die anwendbare Situationshypothese zugeordnete Hypothesenwahrscheinlichkeit bestimmt. Hierzu wird der zwischen 0 und 1 liegende Wertebereich der Hypothesenwahrscheinlichkeit in Intervalle eingeteilt, denen jeweils eine der vorgegebenen Interventionsstufen zugeordnet sind. Aufgrund der nachfolgenden Minimalwertbildung zur Bestimmung der Interventionsstufe IS1 wird die Interventionsstufe IS1 somit auf eine in Abhängigkeit von der Hypothesenwahrscheinlichkeit ermittelte Interventionsstufe begrenzt. Somit ergibt sich bei einer geringen Hypothesenwahrscheinlichkeit auch dann keine hohe Interventionsstufe IS1, wenn die auf das Umfeldobjekt 112 anwendbare Hypothese eine hohe Rangstufe hat. Hierdurch wird die Gefahr von unverhältnismäßigen Sicherheitsmaßnahmen reduziert.

In ähnlicher Weise wird die Interventionsstufe IS1C in Abhängigkeit von der Objektwahrscheinlichkeit ermittelt. Dabei kann es gleichfalls vorgesehen sein, dass der Wertebereich der Objektwahrscheinlichkeit in Intervalle eingeteilt wird, denen jeweils eine Interventionsstufe zugeordnet ist. Aufgrund der nachfolgenden Minimalwertbildung begrenzt dabei die Interventionsstufe IS1C die Interventionsstufe IS1, wodurch die Durchführung unverhältnismäßiger Sicherheitsmaßnahmen im Falle einer ungenauen bzw. unzuverlässigen Detektion des Umfeldobjekts 112 verhindert wird.

Die Interventionsstufe IS2 wird anhand der zuvor genannten Informationen über das Verhalten des Fahrers des Egofahrzeugs 100 und über den Fahrzeugzustand ermittelt. Nachfolgend ergibt sich die insgesamt im Hinblick auf das Umfeldobjekt 112 ermittelte Interventionsstufe IS als Minimum der Interventionsstufen IS1 und IS2. Aufgrund der Minimalwertbildung erfolgt auch anhand der Interventionsstufe IS2 eine Begrenzung der Interventionsstufe IS auf eine Stufe, die insbesondere nicht im Widerspruch zu dem Verhalten des Fahrers steht. Hierdurch wird gleichfalls die Ausführung von unverhältnismäßigen oder von dem Fahrer nicht gewünschten bzw. erwarteten Sicherheitsmaßnahmen vermieden.

In Abhängigkeit von dem Verhalten des Fahrers des Egofahrzeugs 100 wird dabei die Interventionsstufe IS2A ermittelt. Zur Bestimmung der Interventionsstufe IS2A werden in einer Ausführungsform folgende Verhaltensweisen des Fahrers des Egofahrzeugs 100 unterschieden, die einen Anhaltspunkt dafür geben, ob der Fahrer die Situation als unbedenklich, unsicher oder eher gefährlich einschätzt:
i) Der Fahrer beschleunigt das Egofahrzeug 100 durch eine entsprechende Betätigung des Fahrpedals 102. Dies entspricht einer negativen Rückmeldung des Fahrers.
ii) Der Fahrer hat das Fahrpedal 102 innerhalb einer vorgegebenen Zeitspanne nicht mehr betätigt oder die Pedalstellung des Fahrpedals 102 ist innerhalb einer vorgegebenen Zeitspanne unverändert geblieben. In diesem Fall zeigt der Fahrer keine Reaktion auf die aktuelle Fahrsituation.
iii) Der Fahrer löst das Fahrpedal 102. Dies entspricht einer leicht positiven Rückmeldung des Fahrers.
iv) Der Fahrer betätigt das Bremspedal 103 bzw. erhöht den Bremsdruck im Hauptzylinder 104 der Bremsanlage. Dies entspricht einer stark positiven Rückmeldung des Fahrers.

Jeder dieser Verhaltensweisen ist einer Interventionsstufe zugeordnet, die aufgrund er vorgesehenen Minimalwertbildung zur Bestimmung der Interventionsstufe IS der höchsten Interventionsstufe entspricht, die bei dem entsprechenden Verhalten des Fahrers anwendbar ist. Bei einer negativen Rückmeldung des Fahrers ist eine niedrige Interventionsstufe vorgegeben, beispielsweise eine Interventionsstufe, die auf eine Fahrerwarnung beschränkt ist. Ein Eingriff in das Fahrverhalten des Egofahrzeugs 100 erfolgt in diesem Fall nicht, da davon auszugehen ist, dass der Fahrer die Situation nicht als riskant einschätzt. Ist keine Reaktion des Fahrers erkennbar oder liegt eine leicht positive Rückmeldung des Fahrers vor, dann wird vorzugsweise eine mittlere Interventionsstufe vorgegeben. In diesem Fall ist davon auszugehen, dass der Fahrer die Situation zumindest nicht als sicher einschätzt. Bei einer starken positiven Rückmeldung des Fahrers ist davon auszugehen, dass dieser die Fahrsituation zumindest als potenziell gefährlich ansieht und einen Eingriff in das Fahrverhalten für erforderlich hält. Daher ist in diesem Fall vorzugsweise die höchste Interventionsstufe als maximale Interventionsstufe vorgesehen.

Die Interventionsstufe IS2B wird in Abhängigkeit von den Informationen über den Fahrzeugzustand des Egofahrzeugs 100 ermittelt. Dabei wird, wie zuvor bereits erwähnt, geprüft, ob der Antriebsmotor 101 des Egofahrzeugs 100 in Betrieb ist und ob sich das Egofahrzeug 100 in Vorwärtsrichtung bewegt. Ist dies der Fall, dann ist grundsätzlich die Ansteuerung aller vorhandenen Sicherheitsmittel 116 in jedweder Stufe möglich. Daher wird in diesem Fall die höchste Interventionsstufe ausgewählt. Wenn der Antriebsmotor des Egofahrzeugs 100 nicht in Betrieb ist oder sich das Egofahrzeug 100 nicht in Vorwärtsrichtung bewegt, dann werden vorzugsweise keinerlei Sicherheitsmaßnahmen eingeleitet. Daher wählt der Gefahrenrechner 202 in diesem Fall die Interventionsstufe 0 aus.

Die Ansteuerung der Sicherheitsmittel 116 des Egofahrzeugs 100 wird von dem Gefahrenrechner 202 auf der Grundlage der höchsten Interventionsstufe vorgenommen, die für die relevanten Umfeldobjekte 114 in der zuvor beschriebenen Weise ermittelt wird. Die Modi, in denen die Sicherheitsmittel 116 innerhalb der verschiedenen Interventionsstufen betrieben werden, sind innerhalb des Gefahrenrechners 202 bzw. des Sicherheitssystems 114 in einer Tabelle gespeichert. Entsprechend der ermittelten Interventionsstufe werden die vorgesehenen Sicherheitsmittel 116 dann anhand von Steuerbefehlen von dem Gefahrenrechner 202 angesteuert. Falls dabei zur Ansteuerung eines Sicherheitsmittels 116 die Stärke des Eingriffs zu ermitteln ist, wie es beispielsweise im Falle einer Zielbremsung der Fall ist, dann werden die entsprechenden Stellgrößen gleichfalls von dem Gefahrenrechner 202 anhand der Objektdaten des "gefährlichsten Umfeldobjekts" - d.h. des Umfeldobjekts 112, für das die insgesamt maßgebliche Interventionsstufe ermittelt worden ist - berechnet und an das betreffende Sicherheitsmittel 114 übergeben.

## Patentansprüche

1. Verfahren zum Ansteuern von Sicherheitsmitteln (116) in einem Kraftfahrzeug (100) in einer Fahrsituation, in der es zu einer Kollision zwischen dem Kraftfahrzeug (100) und einem Umfeldobjekt (112) im Umfeld des Kraftfahrzeugs (100) kommen kann, bei dem
- Bewegungsdaten wenigstens eines Umfeldobjekts (112) bestimmt werden,
- nach Maßgabe der Bewegungsdaten wenigstens eine Situationshypothese in Bezug auf das Umfeldobjekt (112) ermittelt wird, welche eine in Bezug auf das Umfeldobjekt (112) vorliegende Fahrsituation beschreibt, und
- die Sicherheitsmittel (116) nach Maßgabe der ermittelten Situationshypothese angesteuert werden,
**dadurch gekennzeichnet,**
**dass** die Situationshypothese aus einer Menge mit begrenzter Anzahl vorgegebener Situationshypothesen ausgewählt wird.

2. Verfahren nach Anspruch 1,
**dadurch gekennzeichnet,**
**dass** Bewegungsdaten des Kraftfahrzeugs (100) ermittelt werden, und bei der Ermittlung der Situationshypothese für das Umfeldobjekt (112) berücksichtigt werden.

3. Verfahren nach Anspruch 1 oder 2,
**dadurch gekennzeichnet,**
**dass** die Situationshypothese in Abhängigkeit von einer Zeitspanne (TTC) bis zu einer möglichen Kollision zwischen dem Kraftfahrzeug (100) und dem Umfeldobjekt (112) ausgewählt wird.

4. Verfahren nach einem der vorangegangenen Ansprüche,
**dadurch gekennzeichnet,**
**dass** die Situationshypothese in Abhängigkeit von einer Verzögerung ausgewählt wird, die erforderlich ist, um eine Kollision zwischen dem Kraftfahrzeug (100) und dem Umfeldobjekt (112) durch ein Bremsmanöver des Kraftfahrzeugs (100) zu vermeiden.

5. Verfahren nach einem der vorangegangenen Ansprüche,
**dadurch gekennzeichnet,**
**dass** mehrere Umfeldbereiche (300; 400; 500) des Umfelds (113) des Kraftfahrzeugs (100) vorgegeben werden, wobei die Situationshypothese in Abhängigkeit von dem Umfeldbereich (300; 400; 500) ausgewählt wird, in dem sich das Umfeldobjekt (112) befindet.

6. Verfahren nach einem der vorangegangenen Ansprüche,
**dadurch gekennzeichnet,**
**dass** in Bezug auf wenigstens eine erste Situationshypothese ein Umfeldbereich (300) vorgegeben wird, der einen Bereich vor dem Kraftfahrzeug (100) innerhalb einer Fahrspur (301) umfasst, in der sich das Kraftfahrzeug (100) bewegt.

7. Verfahren nach einem der vorangegangenen Ansprüche,
**dadurch gekennzeichnet,**
**dass** in Bezug auf wenigstens eine zweite Situationshypothese ein Umfeldbereich (400) vorgegebenen wird, der einen Bereich vor dem Kraftfahrzeug (100) an den Rändern der Fahrspur (301) umfasst, in der sich das Kraftfahrzeug (100) bewegt.

8. Verfahren nach einem der vorangegangenen Ansprüche,
**dadurch gekennzeichnet,**
**dass** in Bezug auf wenigstens eine dritte Situationshypothese ein Umfeldbereich (500) vorgegebenen wird, der einen Bereich vor dem Kraftfahrzeug (500) innerhalb einer Fahrspur (302) umfasst, die benachbart zu der Fahrspur (301) ist, in der sich das Kraftfahrzeug (100) bewegt.

9. Verfahren nach einem der vorangegangenen Ansprüche,
**dadurch gekennzeichnet,**
**dass** die Situationshypothese in Abhängigkeit von einer Lateralgeschwindigkeit (v_{y}) des Umfeldobjekts (112) ausgewählt wird, wobei die Lateralgeschwindigkeit (v_{y}) eine Komponente einer Geschwindigkeit des Umfeldobjekts (112) entspricht, die senkrecht zu einer berechneten Bewegungstrajektorie des Kraftfahrzeugs (100) gerichtet ist.

10. Verfahren nach einem der vorangegangenen Ansprüche,
**dadurch gekennzeichnet,**
**dass** für ein Umfeldobjekt (100), das sich in einem der vorgegebenen Umfeldbereiche (300; 400; 500) befindet, eine der in Bezug auf den Umfeldbereich (300; 400; 500) vorgegebenen Situationshypothesen in Abhängigkeit von seiner Lateralgeschwindigkeit und/oder Zeitspanne (TTC) bis zu einer möglichen Kollision zwischen dem Kraftfahrzeug (100) und dem Umfeldobjekt (112) ausgewählt wird.

11. Verfahren nach einem der vorangegangenen Ansprüche,
**dadurch gekennzeichnet,**
**dass** eine Hypothesenwahrscheinlichkeit bestimmt wird, welche ein Maß für eine Sicherheit dafür ist, dass die ausgewählte Situationshypothese auf das Umfeldobjekt (100) anwendbar ist, wobei die Hypothesenwahrscheinlichkeit bei der Ansteuerung der Sicherheitsmittel (116) berücksichtigt wird.

12. Verfahren nach einem der vorangegangenen Ansprüche,
**dadurch gekennzeichnet,**
**dass** die Hypothesenwahrscheinlichkeit in Abhängigkeit von der Zeitspanne (TTC) bis zu einer möglichen Kollision mit dem Umfeldobjekt (112) bestimmt wird.

13. Verfahren nach einem der vorangegangenen Ansprüche,
**dadurch gekennzeichnet,**
**dass** die Hypothesenwahrscheinlichkeit in Abhängigkeit von der Position des Umfeldobjekts (100) innerhalb des vorgegebenen Umfeldbereichs (300; 400; 500) ermittelt wird, wobei die Hypothesenwahrscheinlichkeit desto kleiner ist, je näher sich das Umfeldobjekt (112) am Rand des vorgegebenen Umfeldbereichs (300; 400; 500) befindet.

14. Verfahren nach einem der vorangegangenen Ansprüche,
**dadurch gekennzeichnet,**
**dass** die Hypothesenwahrscheinlichkeit in Abhängigkeit von der Lateralgeschwindigkeit (v_{y}) des Umfeldobjekts (112) bestimmt wird.

15. Verfahren nach einem der vorangegangenen Ansprüche,
**dadurch gekennzeichnet,**
**dass** eine Objektwahrscheinlichkeit ermittelt wird, die ein Maß für die Sicherheit ist, mit der das Umfeldobjekt (112) detektiert worden ist, wobei die Objektwahrscheinlichkeit bei der Ansteuerung der Sicherheitsmittel (112) berücksichtigt wird.

16. Verfahren nach einem oder mehreren der vorangegangenen Ansprüche,
**dadurch gekennzeichnet,**
**dass** die Ansteuerung der Sicherheitsmittel (116) stufenweise erfolgt, wobei die Stufe, in der die Sicherheitsmittel (116) angesteuert werden, in Abhängigkeit von der in Bezug auf das Umfeldobjekt (112) ermittelten Situationshypothese bestimmt wird.

17. Verfahren nach einem oder mehreren der vorangegangenen Ansprüche,
**dadurch gekennzeichnet,**
**dass** die Stufe, in der die Sicherheitsmittel (116) angesteuert werden, auf eine maximale Stufe begrenzt wird, die in Abhängigkeit von der Hypothesenwahrscheinlichkeit und/oder der Objektwahrscheinlichkeit ermittelt wird.

18. Computerprogrammprodukt, das ein Computerprogramm aufweist, welches Befehle zur Ausführung eines Verfahrens nach einem der vorangegangenen Ansprüche auf einem Computer aufweist.

19. System zum Ansteuern von Sicherheitsmitteln (116) in einem Kraftfahrzeug (100) in einer Fahrsituation, in der es zu einer Kollision zwischen dem Kraftfahrzeug (100) und einem Umfeldobjekt (112) im Umfeld des Kraftfahrzeugs (100) kommen kann, umfassend:
- wenigstens einen Umfeldsensor (111), der zur Bestimmung von Bewegungsdaten wenigstens eines Umfeldobjekts (112) in einem Erfassungsbereich (113) des Umfeldsensors (111) verwendbar ist,
- eine Bewertungseinrichtung (201, 205₁,...,205ₙ), die dazu ausgebildet ist, nach Maßgabe der Bewegungsdaten wenigstens eine Situationshypothese in Bezug auf das Umfeldobjekt (112) zu ermitteln, welche eine in Bezug auf das Umfeldobjekt (112) vorliegende Fahrsituation beschreibt, und
- einen Gefahrenrechner (202), der dazu ausgebildet ist, Steuerbefehle zum Ansteuern der Sicherheitsmittel (116) nach Maßgabe der ermittelten Situationshypothese zu ermitteln,
**dadurch gekennzeichnet,**
**dass** die Situationshypothese aus einer Menge mit begrenzter Anzahl vorgegebener Situationshypothesen ausgewählt wird.

20. Kraftfahrzeug, umfassend Sicherheitsmittel (116) zur Erhöhung der Fahrsicherheit bei einer möglichen Kollision zwischen dem Kraftfahrzeug (100) und einem Umfeldobjekt (112) und ein System nach Anspruch 19 zum Ansteuern der Sicherheitsmittel (116).

## Claims

1. A method for actuating safety means (116) in a motor vehicle (100) in a driving situation in which a collision may occur between the motor vehicle (100) and an object (112) in the surrounding area of the motor vehicle (100), wherein
- movement data of at least one object (112) in the surrounding area are determined,
- at least one situation hypothesis in relation to the object (112) in the surrounding area and which describes an existing driving situation relating to the object (112) in the surrounding area, is established in accordance with the movement data, and
- the safety means (116) are actuated in accordance with the established situation hypothesis,
**characterized in that**
the situation hypothesis is selected from a limited number of predefined situation hypotheses.

2. The method according to Claim 1,
**characterized in that**
movement data of the motor vehicle (100) are established and taken into consideration during the establishment of the situation hypothesis for the object (112) in the surrounding area.

3. The method according to Claim 1 or 2,
**characterized in that**
the situation hypothesis is selected depending on a time span (TTC) until a possible collision between the motor vehicle (100) and the object (112) in the surrounding area.

4. The method according to any one of the preceding claims,
**characterized in that**
the situation hypothesis is selected depending on a deceleration which is required in order to avoid a collision between the motor vehicle (100) and the object (112) in the surrounding area by means of a braking maneuver of the motor vehicle (100).

5. The method according to any one of the preceding claims,
**characterized in that**
multiple surrounding areas (300; 400; 500) of the surroundings (113) of the motor vehicle (100) are predefined, wherein the situation hypothesis is selected depending on the surrounding area (300; 400; 500) in which the object (112) is located.

6. The method according to any one of the preceding claims,
**characterized in that**
a surrounding area (300), which comprises an area ahead of the motor vehicle (100) within a lane (301) in which the motor vehicle (100) is moving, is predefined in relation to at least one first situation hypothesis.

7. The method according to any one of the preceding claims,
**characterized in that**
a surrounding area (400), which comprises an area ahead of the motor vehicle (100) at the edges of the lane (301) in which the motor vehicle (100) is moving, is predefined in relation to at least one second situation hypothesis.

8. The method according to any one of the preceding claims,
**characterized in that**
a surrounding area (500), which comprises an area ahead of the motor vehicle (100) within a lane (302) which is adjacent to the lane (301) in which the motor vehicle (100) is moving, is predefined in relation to at least one third situation hypothesis.

9. The method according to any one of the preceding claims,
**characterized in that**
the situation hypothesis is selected depending on a lateral speed (v_{y}) of the object (112) in the surrounding area, wherein the lateral speed (v_{y}) corresponds to a component of a speed of the object (112) in the surrounding area which is oriented perpendicularly to a calculated movement trajectory of the motor vehicle (100).

10. The method according to any one of the preceding claims,
**characterized in that**
one of the situation hypotheses which is predefined in relation to the surrounding area (300; 400; 500) is selected depending on its lateral speed and/or time span (TTC) until a possible collision between the motor vehicle (100) and the object (112) in the surrounding area for an object (112) which is located in one of the predefined surrounding areas (300; 400; 500).

11. The method according to any one of the preceding claims,
**characterized in that**
a hypothesis probability is determined, which is a measure of certainty that the selected situation hypothesis can be applied to the object (112) in the surrounding area, wherein the hypothesis probability is taken into consideration during the actuation of the safety means (116).

12. The method according to any one of the preceding claims,
**characterized in that**
the hypothesis probability is determined depending on the time span (TTC) until a possible collision with the object (112) in the surrounding area.

13. The method according to any one of the preceding claims,
**characterized in that**
the hypothesis probability is established depending on the position of the object (112) within the predefined surrounding area (300; 400; 500), wherein the hypothesis probability is all the smaller the closer the object (112) is located to the edge of the predefined surrounding area (300; 400; 500).

14. The method according to any one of the preceding claims,
**characterized in that**
the hypothesis probability is determined depending on the lateral speed (v_{y}) of the object (112) in the surrounding area.

15. The method according to any one of the preceding claims,
**characterized in that**
an object probability, which is a measure of the certainty with which the object (112) in the surrounding area has been detected, is established, wherein the object probability is taken into consideration during the actuation of the safety means (116).

16. The method according to one or more of the preceding claims,
**characterized in that**
the safety means (116) are actuated one step at a time, wherein the step in which the safety means (116) are actuated is determined depending on the situation hypothesis established in relation to the object (112) in the surrounding area.

17. The method according to one or more of the preceding claims,
**characterized in that**
the step in which the safety means (116) are actuated is limited to a maximum step which is established depending on the hypothesis probability and/or the object probability.

18. A computer program product having a computer program which has commands for carrying out a method according to any one of the preceding claims on a computer.

19. A system for actuating safety means (116) in a motor vehicle (100) in a driving situation in which a collision may occur between the motor vehicle (100) and an object (112) in the surrounding area of the motor vehicle (100), comprising:
- at least one environment sensor (111) which is usable for determining movement data of at least one object (112) in a detection area (113) of the environment sensor (111),
- an evaluation device (201, 205₁,...,205ₙ) which is configured to establish at least one situation hypothesis in relation to the object (112) in the surrounding area and describes an existing driving situation in relation to the object (112) in the surrounding area, in accordance with the movement data, and
- a risk calculator (202) which is configured to establish control commands for actuating the safety means (116) in accordance with the established situation hypothesis,
**characterized in that**
the situation hypothesis is selected from a limited number of predefined situation hypotheses.

20. A motor vehicle, comprising safety means (116) for increasing the driving safety in the event of a possible collision between the motor vehicle (100) and an object (112) in the surrounding area, and a system according to Claim 19 for actuating the safety means (116).

## Revendications

1. Procédé pour la commande de moyens de sécurité (116) dans un véhicule automobile (100) dans une situation de conduite dans laquelle une collision entre le véhicule automobile (100) et un objet d'environnement (112) dans l'environnement du véhicule automobile (100) peut se produire, sur lequel
- des données de mouvement d'au moins un objet d'environnement (112) sont déterminées,
- au moins une hypothèse de situation relativement à l'objet d'environnement (112) est déterminée selon les données de mouvement, laquelle hypothèse décrit une situation de conduite présente relativement à l'objet d'environnement (112), et
- les moyens de sécurité (116) sont commandés selon l'hypothèse de situation déterminée.
**caractérisé en ce que**
l'hypothèse de situation est sélectionnée parmi une quantité avec nombre limité d'hypothèses de situation prédéfinies.

2. Procédé selon la revendication 1,
**caractérisé en ce que**
des données de mouvement du véhicule automobile (100) sont déterminées, et sont prises en compte lors de la détermination de l'hypothèse de situation pour l'objet d'environnement (112).

3. Procédé selon la revendication 1 ou 2,
**caractérisé en ce que**
l'hypothèse de situation est sélectionnée en fonction d'un intervalle de temps (TTC) jusqu'à une collision éventuelle entre le véhicule automobile (100) et l'objet d'environnement (112).

4. Procédé selon l'une quelconque des revendications précédentes, **caractérisé en ce que**
l'hypothèse de situation est sélectionnée en fonction d'un retard qui est nécessaire pour éviter une collision entre le véhicule automobile (100) et l'objet d'environnement (112) par une manoeuvre de freinage du véhicule automobile (100).

5. Procédé selon l'une quelconque des revendications précédentes,
**caractérisé en ce que**
plusieurs zones d'environnement (300 ; 400 ; 500) de l'environnement (113) du véhicule automobile (100) sont prédéfinies, l'hypothèse de situation étant sélectionnée en fonction de la zone d'environnement (300 ; 400 ; 500) dans laquelle l'objet d'environnement (112) se trouve.

6. Procédé selon l'une quelconque des revendications précédentes,
**caractérisé en ce qu'**
une zone d'environnement (300) est prédéfinie relativement à au moins une première hypothèse de situation, laquelle zone comprend une zone devant le véhicule automobile (100) dans une voie de circulation (301) dans laquelle le véhicule automobile (100) se déplace.

7. Procédé selon l'une quelconque des revendications précédentes,
**caractérisé en ce qu'**
une zone d'environnement (400) est prédéfinie relativement à au moins une deuxième hypothèse de situation, laquelle zone comprend une zone devant le véhicule automobile (100) sur les bords de la voie de circulation (301) dans laquelle le véhicule automobile (100) se déplace.

8. Procédé selon l'une quelconque des revendications précédentes,
**caractérisé en ce qu'**
une zone d'environnement (500) est prédéfinie relativement à au moins une troisième hypothèse de situation, laquelle zone comprend une zone devant le véhicule automobile (100) dans une voie de circulation (302), laquelle est voisine de la voie de circulation (301) dans laquelle le véhicule automobile (100) se déplace.

9. Procédé selon l'une quelconque des revendications précédentes,
**caractérisé en ce que**
l'hypothèse de situation est sélectionnée en fonction d'une vitesse latérale (v_{y}) de l'objet d'environnement (112), la vitesse latérale (v_{y}) correspondant à une composante d'une vitesse de l'objet d'environnement (112), laquelle est orientée verticalement par rapport à une trajectoire de déplacement du véhicule automobile (100) calculée.

10. Procédé selon l'une quelconque des revendications précédentes,
**caractérisé en ce qu'**
une des hypothèses de situation prédéfinies relativement à la zone d'environnement (300 ; 400 ; 500) est sélectionnée en fonction de sa vitesse latérale et/ou son intervalle de temps (TTC) jusqu'à une collision éventuelle entre le véhicule automobile (100) et l'objet d'environnement (112), pour un objet d'environnement (112) qui se trouve dans une des zones d'environnement (300 ; 400 ; 500) prédéfinies.

11. Procédé selon l'une quelconque des revendications précédentes,
**caractérisé en ce qu'**
une probabilité d'hypothèse est déterminée, laquelle représente une mesure pour une garantie que l'hypothèse de situation sélectionnée est applicable à l'objet d'environnement (112), la probabilité d'hypothèse étant prise en compte lors de la commande les moyens de sécurité (116).

12. Procédé selon l'une quelconque des revendications précédentes,
**caractérisé en ce que**
la probabilité d'hypothèse est déterminée en fonction d'un intervalle de temps (TTC) jusqu'à une collision éventuelle avec l'objet d'environnement (112).

13. Procédé selon l'une quelconque des revendications précédentes,
**caractérisé en ce que**
la probabilité d'hypothèse est déterminée en fonction de la position de l'objet d'environnement (112) dans la zone d'environnement prédéfinie (300 ; 400 ; 500), plus l'objet d'environnement (112) étant proche du bord de la zone d'environnement (300 ; 400 ; 500) prédéfinie, plus la probabilité d'hypothèse étant faible.

14. Procédé selon l'une quelconque des revendications précédentes,
**caractérisé en ce que**
la probabilité d'hypothèse est déterminée en fonction de la vitesse latérale (v_{y}) de l'objet d'environnement (112).

15. Procédé selon l'une quelconque des revendications précédentes,
**caractérisé en ce qu'**
une probabilité d'objet est déterminée, laquelle représente une mesure pour la garantie avec laquelle l'objet d'environnement (112) est détecté, la probabilité d'objet étant prise en compte lors de la commande des moyens de sécurité (116).

16. Procédé selon l'une ou plusieurs des revendications précédentes,
**caractérisé en ce que**
la commande des moyens de sécurité (116) est effectuée graduellement, le degré auquel les moyens de sécurité (116) sont commandés étant déterminé en fonction de l'hypothèse de situation déterminée relativement à l'objet d'environnement (112).

17. Procédé selon l'une ou plusieurs des revendications précédentes,
**caractérisé en ce que**
le degré auquel les moyens de sécurité (116) sont commandés est limité à un degré maximal, lequel est déterminé en fonction de la probabilité d'hypothèse et/ou de la probabilité d'objet.

18. Produit de programme informatique, présentant un programme informatique, lequel présente des commandes pour l'exécution d'un procédé selon l'une quelconque des revendications précédentes sur un ordinateur.

19. Système pour la commande de moyens de sécurité (116) dans un véhicule automobile (100) dans une situation de conduite dans laquelle une collision entre le véhicule automobile (100) et un objet d'environnement (112) dans l'environnement du véhicule automobile (100) peut se produire, comprenant :
- au moins un capteur d'environnement (111), lequel est utilisable pour la détermination des données de mouvement d'au moins un objet d'environnement (112) dans une zone de détection (113) du capteur d'environnement (111),
- une installation d'évaluation (201, 205₁,...205ₙ), laquelle est formée pour déterminer une hypothèse de situation relativement à l'objet d'environnement (112) selon les données de mouvement, laquelle hypothèse décrit une situation de conduite présente relativement à l'objet d'environnement (112), et
- un calculateur de danger (202), lequel est formé pour déterminer des instructions de contrôle pour la commande des moyens de sécurité (116) selon l'hypothèse de situation déterminée,
**caractérisé en ce que**
l'hypothèse de situation est sélectionnée parmi une quantité avec nombre limité d'hypothèses de situation prédéfinies.

20. Véhicule automobile, comprenant des moyens de sécurité (116) pour l'augmentation de la sécurité de véhicule lors d'une collision éventuelle entre le véhicule automobile (100) et un objet d'environnement (112), et un système selon la revendication 19 pour la commande des moyens de sécurité (116).
